# EUROPEAN PATENT APPLICATION

(11) **EP 4 525 497 A1**
(43) Date of publication of application: **19.03.2025**
(21) Application number: 22941223.4
(22) Date of filing: 13.05.2022
(51) Int. Cl.: H04W 12/041, H04W 12/0431, H04W 12/08

(54) **KEY MANAGEMENT METHOD AND APPARATUS, DEVICE, AND STORAGE MEDIUM**

(71) Applicant: Beijing Xiaomi Mobile Software Co., Ltd., Beijing 100085 (CN)
(72) Inventor: LIANG, Haoran, Beijing 100085 (CN); LU, Wei, Beijing 100085 (CN)
(74) Representative: Gunzelmann, Rainer
(86) International application number: PCT/CN2022/092886
(87) International publication number: WO 2023/216273

(57) **Abstract**

The present application relates to the field of mobile communications, and discloses a key management method and apparatus, a device, and a storage medium. The method comprises: receiving an application key confirmation request sent by an AAnF in a home network. In a roaming scenario, the application key confirmation request is sent to an agent entity in a service network by means of the AAnF in the home network, so that a related network element in the service network can learn that a terminal can establish AKMA-based communication with an AF in the home network in the roaming scenario, thereby implementing providing an AKMA service in the roaming scenario.

## Description

### TECHNICAL FIELD

The disclosure relates to the field of mobile communication, and in particular, to a key management method, apparatus, device and storage medium.

### BACKGROUND

At present, Authentication and Key Management for Applications (AKMA) based on the 3rd Generation Partnership Project (3GPP) credentials has been used as a solution to protect communication between terminals and Application Functions (AF) in scenarios such as Proximity based Services (ProSe) and Message within 5G (MSGin5G).

However, there is currently no feasible solution for AKMA in roaming scenarios in related technologies.

### SUMMARY

Embodiments of the present disclosure provide a key management method, apparatus, device and storage medium. The technical solution is as follows.

According to an aspect of the present disclosure, a key management method is provided. The method is applied in a roaming scenario, performed by a proxy entity in a service network, and includes:
receiving an application key confirmation request sent by an anchor function network element (AAnF) of authentication and key management for applications (AKMA) in a home network.

According to another aspect of the present disclosure, a key management method is provided. The method is applied in a roaming scenario, performed by an AF in a home network, and includes:
receiving a service network identifier and an AKMA key identifier sent by a terminal;
sending an application key acquisition request to an AAnF in the home network, wherein the application key acquisition request carries the service network identifier, and the service network identifier is used to trigger the AAnF to send an application key confirmation request to a proxy entity in a service network in case that the service network identifier of the terminal is different from a home network identifier; and
receiving an application key acquisition response fed back from the AAnF, wherein the application key acquisition response includes AKMA application key information of the AF.

According to another aspect of the present disclosure, a key management method is provided. The method is applied in a roaming scenario, performed by an AAnF in a home network, and includes:
receiving an application key acquisition request sent by an AF in the home network, wherein the application key acquisition request carries a service network identifier;
generating an AKMA application key of the AF based on an AKMA key of a terminal;
feeding back an application key acquisition response to the AF, wherein the application key acquisition response includes AKMA application key information of the AF; and
sending an application key confirmation request to a proxy entity in a service network.

According to another aspect of the present disclosure, a key management method is provided. The method is applied in a roaming scenario, performed by a terminal, and includes:
sending a service network identifier and an AKMA key identifier to an AF in a home network, wherein the service network identifier is used to trigger an AAnF in the home network to send an application key confirmation request to a proxy entity in a service network in case that the service network identifier of the terminal is different from a home network identifier, and the AKMA key identifier is an identifier of an AKMA key of the terminal.

According to another aspect of the present disclosure, a key management apparatus is provided. The apparatus is applied in a roaming scenario, and the apparatus includes:
a receiving module, configured to receive an application key confirmation request sent by an anchor function network element (AAnF) of authentication and key management for applications (AKMA) in a home network.

In an optional design, the application key confirmation request includes at least one of:
AKMA application key;
expiration time of the AKMA application key;
AF identifier;
AKMA key identifier;
subscription permanent identifier (SUPI) of a terminal;
wherein, the AF identifier is an identifier of an AF in the home network, and the AKMA key identifier is an identifier of an AKMA key of the terminal.

In an optional design, the application key confirmation request is sent by the AAnF to the proxy entity in case that a service network identifier of a terminal is different from a home network identifier.

In an optional design, the apparatus further includes:
a sending module, configured to send an application key confirmation response to the AAnF.

In an optional design, the apparatus further includes:
a storage module, configured to store the application key confirmation request.

In an optional design, the proxy entity is determined by the AAnF in network elements of the service network in case that a service network identifier of the terminal is different from a home network identifier.

In an optional design, the proxy entity is discovered by the AAnF in the network elements of the service network through the network storage function (NRF) in the service network and the home network.

In an optional design, information of the proxy entity is configured locally in the AAnF.

In an optional design, the proxy entity is a separate network function (NF) in the service network; or
the proxy entity is a part of any NF in the service network; or
the proxy entity is a trusted application function within the 3GPP operator domain.

According to another aspect of the present disclosure, a key management apparatus is provided. The apparatus is applied in a roaming scenario, and the apparatus includes:
a receiving module, configured to receive a service network identifier and an AKMA key identifier sent by a terminal; and
a sending module, configured to send an application key acquisition request to an AAnF in the home network, wherein the application key acquisition request carries the service network identifier, and the service network identifier is used to trigger the AAnF to send an application key confirmation request to a proxy entity in a service network in case that the service network identifier of the terminal is different from a home network identifier;
the receiving module is further configured to receive an application key acquisition response fed back from the AAnF, wherein the application key acquisition response includes AKMA application key information of the AF in the home network.

In an optional design, the AKMA application key information includes at least one of:
AKMA application key;
expiration time of the AKMA application key;
SUPI of the terminal.

In an optional design, the sending module is configured to:
send a first application key acquisition request to the AAnF in case that the AF requires terminal identification.

In an optional design, the first application key acquisition request includes at least one of:
AKMA key identifier;
AF identifier;
wherein, the AKMA key identifier is an identifier of an AKMA key of the terminal, and the AF identifier is an identifier of the AF in the home network.

In an optional design, the first application key acquisition request includes the AKMA key identifier and the service network identifier;
the AKMA key identifier carries the service network identifier; or the first application key acquisition request carries the service network identifier through a separate field.

In an optional design, the sending module is configured to:
send a second application key acquisition request to the AAnF in the home network in case that the AF in the home network does not require terminal identification.

In an optional design, the second application key acquisition request includes at least one of:
AKMA key identifier;
AF identifier;
wherein, the AKMA key identifier is an identifier of an AKMA key of the terminal, and the AF identifier is an identifier of the AF in the home network.

In an optional design, the second application key acquisition request includes the AKMA key identifier and the service network identifier;
the AKMA key identifier carries the service network identifier; or the second application key acquisition request carries the service network identifier through a separate field.

In an optional design, whether the AF requires the terminal identification is indicated by a policy in the AF.

In an optional design, the receiving module is configured to:
receive an error response fed back from the AAnF, wherein the error response is sent in case that the AKMA key of the terminal is not stored in the AAnF;
the sending module is configured to send the error response to the terminal.

In an optional design, the apparatus further includes:
a discovering module, configured to discover the AAnF through NRF in the home network.

In an optional design, the receiving module is configured to:
receive an application session establishment request sent by the terminal, wherein the application session establishment request carries the service network identifier;
the sending module is configured to feed back an application session establishment response to the terminal.

In an optional design, the application session establishment request includes an AKMA key identifier of AKMA, wherein the AKMA key identifier carries the service network identifier; or the application session establishment request includes the AKMA key identifier and the service network identifier;
wherein, the AKMA key identifier is an identifier of an AKMA key of the terminal.

In an optional design, the sending module is configured to:
feed back rejection information for application session to the terminal in case of receiving an error response fed back from the AAnF, wherein the rejection information includes a response failure reason.

In an optional design, the AKMA key identifier adopts a Network Access Identifier (NAI) format.

According to another aspect of the present disclosure, a key management apparatus is provided. The apparatus is applied in a roaming scenario, and the apparatus includes:
a receiving module, configured to receive an application key acquisition request sent by an AF in the home network, wherein the application key acquisition request carries a service network identifier;
a generating module, configured to generate an AKMA application key of the AF based on an AKMA key of a terminal;
a sending module, configured to feed back an application key acquisition response to the AF, wherein the application key acquisition response includes AKMA application key information of the AF;
the sending module is further configured to send an application key confirmation request to a proxy entity in a service network.

In an optional design, the AKMA application key information includes at least one of:
AKMA application key;
expiration time of the AKMA application key;
SUPI of the terminal.

In an optional design, the receiving module is configured to:
receive a first application key acquisition request sent by the AF, wherein the first application key acquisition request is used to indicate that the AF requires terminal identification.

In an optional design, the first application key acquisition request includes at least one of:
AKMA key identifier;
AF identifier;
wherein, the AKMA key identifier is an identifier of an AKMA key of the terminal, and the AF identifier is an identifier of the AF.

In an optional design, the first application key acquisition request includes the AKMA key identifier and the service network identifier;
the AKMA key identifier carries the service network identifier; or the first application key acquisition request carries the service network identifier through a separate field.

In an optional design, the receiving module is configured to:
receive a second application key acquisition request sent by the AF, wherein the second application key acquisition request is used to indicate that the AF does not require terminal identification.

In an optional design, the second application key acquisition request includes at least one of:
AKMA key identifier;
AF identifier;
wherein, the AKMA key identifier is an identifier of an AKMA key of the terminal, and the AF identifier is an identifier of the AF.

In an optional design, the second application key acquisition request includes the AKMA key identifier and the service network identifier;
the AKMA key identifier carries the service network identifier; or the second application key acquisition request carries the service network identifier through a separate field.

In an optional design, the AKMA application key information fed back from the AAnF does not include SUPI of the terminal in case that the AAnF receives the second application key acquisition request.

In an optional design, the sending module is configured to:
feed back an error response to the AF in case that the AAnF does not store the AKMA key of the terminal.

In an optional design, the apparatus further includes:
a determining module, configured to determine that the AAnF provides services to the AF and a proxy entity in the service network based on authorization information or policy.

In an optional design, the authorization information or policy is provided by a local policy or NRF in the home network.

In an optional design, the application key confirmation request includes at least one of:
AKMA application key;
expiration time of the AKMA application key;
AF identifier;
AKMA key identifier;
SUPI of the terminal;
wherein, the AF identifier is an identifier of an AF in the home network, and the AKMA key identifier is an identifier of an AKMA key of the terminal.

In an optional design, the sending module is configured to:
send the application key confirmation request to the proxy entity in case that a service network identifier of the terminal is different from a home network identifier.

In an optional design, the receiving module is configured to:
receive an application key confirmation response sent by the proxy entity.

In an optional design, the apparatus further includes:
a determining module, configured to determine the proxy entity in network elements of the service network in case that a service network identifier of the terminal is different from a home network identifier.

In an optional design, the determining module is configured to:
discover the proxy entity in the network elements of the service network through an NRF in the service network and the home network, in case that the service network identifier of the terminal is different from the home network identifier.

According to another aspect of the present disclosure, a key management apparatus is provided. The apparatus is applied in a roaming scenario, and the apparatus includes:
a sending module, configured to send a service network identifier and an AKMA key identifier to an AF in a home network, wherein the service network identifier is used to trigger an AAnF in the home network to send an application key confirmation request to a proxy entity in a service network in case that the service network identifier of the terminal is different from a home network identifier, and the AKMA key identifier is an identifier of an AKMA key of the terminal.

In an optional design, the sending module is configured to:
send an application session establishment request to an AF, wherein the application session establishment request carries the service network identifier;
the apparatus further includes:
a receiving module, configured to receive an application session establishment response fed back by the AF.

In an optional design, the application session establishment request includes an AKMA key identifier of AKMA, wherein the AKMA key identifier carries the service network identifier; or the application session establishment request includes the AKMA key identifier and the service network identifier;
wherein, the AKMA key identifier is an identifier of an AKMA key of the terminal.

According to another aspect of the present disclosure, a proxy entity in a service network is provided. The proxy entity includes a communication component;
the communication component is configured to receive an application key confirmation request sent by an AAnF in a home network.

According to another aspect of the present disclosure, an application function (AF) is provided. The AF includes a communication component;
the communication component is configured to receive a service network identifier and an AKMA key identifier sent by a terminal;
send an application key acquisition request to an AAnF in the home network, wherein the application key acquisition request carries the service network identifier, and the service network identifier is used to trigger the AAnF to send an application key confirmation request to a proxy entity in a service network in case that the service network identifier of the terminal is different from a home network identifier; and
receive an application key acquisition response fed back from the AAnF, wherein the application key acquisition response includes AKMA application key information of the AF in the home network.

According to another aspect of the present disclosure, an anchor function network element (AAnF) of authentication and key management for applications (AKMA) is provided. The AAnF includes a communication component and a processor;
the communication component is configured to receive an application key acquisition request sent by an AF in the home network, wherein the application key acquisition request carries a service network identifier;
the processor is configured to generate an AKMA application key of the AF based on an AKMA key of a terminal;
the communication component is configured to feed back an application key acquisition response to the AF, wherein the application key acquisition response includes AKMA application key information of the AF;
the communication component is configured to send an application key confirmation request to a proxy entity in a service network.

According to another aspect of the present disclosure, a terminal is provided. The terminal includes a transceiver.

The transceiver is configured to send a service network identifier and an AKMA key identifier to an AF in a home network, wherein the service network identifier is used to trigger an AAnF in the home network to send an application key confirmation request to a proxy entity in a service network in case that the service network identifier of the terminal is different from a home network identifier, and the AKMA key identifier is an identifier of an AKMA key of the terminal.

According to another aspect of the present disclosure, a computer readable storage medium is provided. The readable storage medium stores executable instructions, which are loaded and executed by a processor to implement the key management method as described above.

According to another aspect of the present disclosure, a chip is provided. The chip includes programmable logic circuits and/or program instructions for implementing the key management method described above when the chip is run on a computer device.

According to another aspect of the present disclosure, there is provided a computer program product or computer program includes computer instructions stored in a computer readable storage medium, wherein a processor reads and executes the computer instructions from the computer readable storage medium, causing a computer device to perform the key management method described in the above aspect.

The technical solution provided in this disclosure includes at least the following beneficial effects.

In the roaming scenario, by sending the application key confirmation request from the AAnF in the home network to the proxy entity in the service network, the relevant network elements in the service network can know that the terminal can establish AKMA based communication with the AF in the home network in the roaming scenario, thereby providing AKMA services in the roaming scenario.

### BRIEF DESCRIPTION OF THE DRAWINGS

In order to provide a clearer explanation of the technical solution in the embodiments of the present disclosure, a brief introduction will be given to the drawings required for the description of the embodiments. It is obvious that the drawings described below are only some embodiments of the present disclosure. For those skilled in the art, other drawings can be obtained based on these drawings without creative labor.
Fig. 1 is a schematic diagram of a network architecture of an AKMA service provided in an exemplary embodiment of the present disclosure.
Fig. 2 is a flowchart of generating an AKMA key provided in an exemplary embodiment of the present disclosure.
Fig. 3 is a schematic diagram of an architecture of a communication system provided in an exemplary embodiment of the present disclosure.
Fig. 4 is a flowchart of a key management method provided in an exemplary embodiment of the present disclosure.
Fig. 5 is a flowchart of a key management method provided in an exemplary embodiment of the present disclosure.
Fig. 6 is a flowchart of a key management method provided in an exemplary embodiment of the present disclosure.
Fig. 7 is a flowchart of a key management method provided in an exemplary embodiment of the present disclosure.
Fig. 8 is a flowchart of a key management method provided in an exemplary embodiment of the present disclosure.
Fig. 9 is a flowchart of a key management method provided in an exemplary embodiment of the present disclosure.
Fig. 10 is a flowchart of a key management method provided in an exemplary embodiment of the present disclosure.
Fig. 11 is a flowchart of a key management method provided in an exemplary embodiment of the present disclosure.
Fig. 12 is a flowchart of a key management method provided in an exemplary embodiment of the present disclosure.
Fig. 13 is a block diagram of a key management apparatus provided in an exemplary embodiment of the present disclosure.
Fig. 14 is a block diagram of a key management apparatus provided in an exemplary embodiment of the present disclosure.
Fig. 15 is a block diagram of a key management apparatus provided in an exemplary embodiment of the present disclosure.
Fig. 16 is a block diagram of a key management apparatus provided in an exemplary embodiment of the present disclosure.
Fig. 17 is a block diagram of a communication device provided in an exemplary embodiment of the present disclosure.
Fig. 18 is a block diagram of a network element device provided in an exemplary embodiment of the present disclosure.

### DETAILED DESCRIPTION

In order to clarify the purpose, technical solution, and advantages of the present disclosure, a further detailed description of the embodiments of the present disclosure will be provided below in conjunction with the accompanying drawings.

The exemplary embodiments will be described in detail here, with examples shown in the accompanying drawings. When referring to the accompanying drawings, unless otherwise indicated, the same numbers in different drawings represent the same or similar elements. The implementations described in the following exemplary embodiments do not represent all implementations consistent with the present disclosure. On the contrary, they are only examples of devices and methods consistent with some aspects of the present disclosure as described in the accompanying claims.

The terms used in this disclosure are for the sole purpose of describing specific embodiments and are not intended to limit this disclosure. The singular forms "a", "the" and "said" used in this disclosure and the accompanying claims are also intended to include the plural form, unless the context clearly indicates otherwise. It should also be understood that the term "and/or" used in this article refers to and includes any or all possible combinations of at least one associated listed item.

It should be understood that although various information may be described using terms such as first, second, third, etc. in this disclosure, such information should not be limited to these terms. These terms are only used to distinguish information for the same type from each other. For example, without departing from the scope of this disclosure, the first information can also be referred to as the second information, and similarly, the second information can also be referred to as the first information. Depending on the context, the word "if" used here can be interpreted as "when...... " or "in case that...... " or "in response to determining ......".

Firstly, an introduction will be given to the relevant technical background involved in the embodiments of this disclosure.

### 5th Generation Mobile Communication Technology (5G) system:

The 5G system includes terminals, access networks, and core networks. The terminal is a device with wireless transmission and reception functions, which can be deployed on land, water, and in the air. This terminal can be applied to at least one scenario among self driving, remote medical, smart grid, transportation safety, smart city, smart home, etc.

The access network is used to implement access related functions and can provide network access functions for authorized users in specific areas. The access network forwards control signals and user data between the terminal and the core network. The access network can include access network devices, which can be devices that provide access for terminals, including Radio Access Network (RAN) devices and Access Network (AN) devices. RAN devices are mainly wireless network devices in 3GPP networks, while AN devices can be access network devices defined by non-3GPP. In systems using different wireless access technologies, the names of devices with base station functionality may vary. For example, in 5G systems, it is called RAN or Next Generation Node Basestation (gNB); in Long Term Evolution (LTE) systems, it is called evolved NodeB (eNB or eNB).

The core network is responsible for maintaining the subscription data of the mobile network, providing functions such as session management, mobility management, policy management, and security authentication for terminals. The core network can include the following network elements: User Plane Function (UPF), Authentication Server Function (AUSF), Access and Mobility Management Function (AMF), Session Management Function (SMF), Network Exposure Function (NEF), Network Function Repository Function (NRF), Policy Control Function (PCF), and Unified Data Management (UDM). Optionally, it can also include Application Function (AF) and Unified Data Repository (UDR).

AMF is mainly responsible for mobility management in mobile networks, such as user location updates, user registration in the network, user switching, etc. SMF is mainly responsible for session management in mobile networks, such as session establishment, modification, and release. UPF is responsible for forwarding and receiving user data in the terminal, able to receive user data from the data network and transmit it to the terminal through access network devices; also able to receive user data from terminals through access network devices and forward it to the data network. PCF mainly supports providing a unified policy framework to control network behavior, provides policy rules to the control layer network functions, and is responsible for obtaining user subscription information related to policy decisions. AUSF is used for performing secure authentication of terminals. NEF is mainly used to support the openness of capabilities and events. NRF is used to provide storage and selection functions for network functional entity information for other network elements. UDM is used to store user data, such as subscription data, authentication/authorization data, etc. AF interacts with the 3GPP core network to provide application layer services, such as providing application layer data routing and offering access network capability openness, interacts with policy frameworks to provide policy control, and interacts with the IP Multimedia Subsystem (IMS) of 5G networks.

Data Network (DN) is used to provide business services to users and can be a private network, such as a local area network; or can also be an external network not controlled by the operator, such as the Internet; or can also be a proprietary network jointly deployed by operators, such as the IMS network. The terminal can access the DN through the established Protocol Data Unit (PDU) session.

It should be understood that in some embodiments of the present disclosure, "5G" may also be referred to as "5G New Radio (NR)" or "NR", and "terminal" may also be referred to as "terminal device" or "user equipment (UE)". The technical solution described in some embodiments of the present disclosure may be applicable to 5G systems, subsequent evolution systems of 5G systems, 6G, and subsequent evolution systems.

### AKMA service based on 3GPP credentials:

UE that supports AKMA service can improve the security of data transmission based on AKMA process security protection when transmitting data with AF that supports AKMA service. For example, when an AF corresponds to a video application server and a UE that supports AKMA service transmits data to the AF, compared to the traditional unprotected transmission method between UE and AF, using AKMA service can improve the security of data transmission.

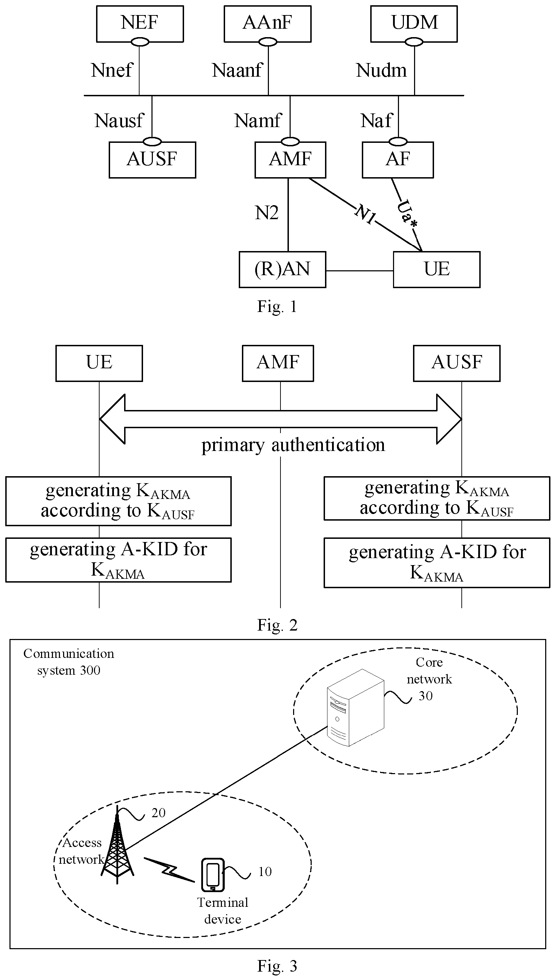

For example, Fig. 1 is a schematic diagram of a network architecture of an AKAM service provided by an exemplary embodiment of the present disclosure. As shown in Fig. 1, the network architecture includes UE, Radio Access Network (RAN), AUSF, AMF, AF, NEF, AKMA Anchor Function (AAnF) and UDM. As shown in Fig. 1, there are three ways for UE to communicate with AF. The first way is for UE to communicate with AF through (R) AN and AMF. The second way is for UE to communicate with AF through AMF. The third way is for UE to directly communicate with AF through the Ua*interface. The Ua*interface is the communication interface between UE and AF. In AKMA service, AUSF can generate the key of AKMA service (i.e. AKMA key) and provide AAnF with the AKMA key of the terminal. The AKMA key can be KAKMA, also known as the root key of AKMA service. The UE side will also generate the same AKMA key by itself, that is, generate the same KAKMA.

Fig. 2 is a flowchart of generating an AKMA key provided by an exemplary embodiment of the present disclosure. As shown in Fig. 2, during the registration process with the 5G core network, the UE sends a registration request to the AMF through the RAN, which carries the identity information of the UE (such as subscriber concealed identifier (SUCI)). The AMF selects the AUSF based on the identity information of the UE and sends a message to the selected AUSF to trigger the primary authentication process. The AUSF performs authentication on the UE, and sends authentication parameters to the AMF, and then the AMF sends authentication parameters to the UE through the RAN. The UE authenticates the AUSF based on the authentication parameters and sends a response to the AMF through the RAN. The AMF compares the responses and if they match, the authentication is successful. The primary authentication in Fig. 2 refers to the process of AUSF authenticating UE and UE authenticating AUSF during the registration process. The primary authentication can also be referred to as bidirectional authentication. After primary authentication, AUSF can use the intermediate key generated during the primary authentication process, such as KAUSF, to generate KAKMA, and generate key identification information for KAKMA. The key identification information can be used to identify KAKMA, for example, may be KAKMA Identifier (A-KID). UE can use the intermediate key generated during the primary authentication process, such as KAUSF, to generate KAKMA, and generate key identification information for KAKMA, before initiating AKMA services after primary authentication. It should be noted that UE and AUSF generate the same KAUSF, KAKMA, and key identification information locally.

Combining the examples in Fig. 1 and Fig. 2, AAnF can interact with AUSF, obtain the key of AKMA service from AUSF, and generate the communication key between the AF and UE, as well as the effective period of the communication key, based on the key of AKMA service and the identifier of the AF. AAnF can send the communication key and its effective period to the AF, so that the AF can use the communication key for data transmission with the UE, thereby improving the security of data transmission between the AF and the UE. The communication key between AF and UE may be KAF, for example.

The KAF between different AFs and the same UE can be different, for example, the KAF between AF1 and UE1 is KAF1, and the KAF between AF2 and UE1 is KAF2. In Fig. 1, AF can interact with 3GPP core network elements. For example, AF can obtain Quality of Service (QoS) parameters from PCF, or provide QoS parameters to PCF, which can affect the data transmission of applications. For another example, AF can interact with NEF. In the AKMA service scenario, the AF obtains the communication key between the AF and the UE, as well as the effective period of the communication key, from the AAnF. AF can be located inside or outside the 5G core network. If AF is located within the 5G core network, it can directly interact with PCF; if AF is located outside the 5G core network, it can interact with PCF through NEF.

It should be noted that the above AKMA service scheme is applied to non-roaming scenarios, where the current service network of the terminal is the same as its home network, and AAnF and AF belong to the home network of the terminal. In the roaming scenario, where the current service network of the terminal is different from its home network, or the service network of the terminal is the visiting network (also known as the visited network), there is currently no feasible solution for AKMA. The home network of the terminal is different from the visited network.

With the method provided in the embodiments of the present disclosure, in a roaming scenario, the terminal sends the service network identifier to the AF in the home network, and the AF in the home network sends the application key acquisition request carrying the service network identifier to the AAnF in the home network, so that the AAnF in the home network can determine the proxy entity in the service network based on the service network identifier and send an application key confirmation request to it, so that the relevant network elements in the service network know that the terminal can establish AKMA based communication with the AF in the home network, thereby providing AKMA services in the roaming scenario.

Fig. 3 shows a schematic diagram of an architecture of a communication system provided by an embodiment of the present disclosure. The system architecture may include: terminal 10, access network device 20, and core network device 30.

The terminal 10 can refer to UE (User Equipment), access terminal, user unit, user station, mobile station, mobile station, remote station, remote terminal, mobile device, wireless communication device, user agent, or user device. Optionally, the terminal can also be a cellular phone, cordless phone, SIP (Session Initiation Protocol) phone, WLL (Wireless Local Loop) station, PDA (Personal Digital Assistant), handheld device with wireless communication function, computing device or other processing device connected to a wireless modem, in vehicle device, wearable device, terminal in 5GS (5th Generation System) or terminal in future evolved PLMN (Public Land Mobile Network), etc. The embodiments of this disclosure are not limited to this. For ease of description, the devices mentioned above are collectively referred to as terminals. The number of terminals 10 is usually multiple, and one or more terminals 10 can be distributed within the cell managed by each access network device 20.

The access network device 20 is a device deployed in the access network to provide wireless communication functionality for terminal 10. The access network device 20 can include various forms of macro base stations, micro base stations, relay stations, access points, and so on. In systems using different wireless access technologies, the names of devices with access network functionality may vary, such as gNodeB or gNB in 5G NR systems. With the evolution of communication technology, the name "access network device" may change. For the convenience of description, in the embodiments of the present disclosure, the devices that provide wireless communication function for terminal 10 are collectively referred to as access network devices. Optionally, a communication relationship can be established between the terminal 10 and the core network device 30 through the access network device 20. For example, in the LTE system, the access network device 20 may be an EUTRAN (Evolved Universal Terrestrial Radio Access Network) or one or more eNodeBs in EUTRAN; in the 5G NR system, the access network device 20 may be a RAN or one or more gNBs within the RAN.

The main functions of the core network device 30 are to provide user connections, manage users, and complete business operations, serving as an interface between the carrier network and external networks. For example, the core network devices in 5G NR systems may include AMF (Access and Mobility Management Function) entities, UPF (User Plane Function) entities, SMF (Session Management Function) entities, AKMA Anchor Function (AAnF) entities, and Application Function (AF) entities. The access network device 20 and the core network device 30 can be collectively referred to as network devices.

In an example, the access network device 20 and the core network device 30 communicate with each other through some air technology, such as the NG interface in the 5G NR system. The access network device 20 and the terminal 10 communicate with each other through some air technology, such as the Uu interface.

Embodiments of the present disclosure provide a key management method, for generating communication keys between AFs located in the home network and terminals in roaming scenarios. The communication keys between the same terminal and different AFs can be the same or different. The embodiments of this disclosure only describe the communication key between a certain AF located in the home network and the terminal.

In the key management method provided in the embodiments of the present disclosure, there are at least one terminal, at least one AF, at least one AAnF, and at least one proxy entity. Illustratively, the key management method provided in the embodiments of the present disclosure is applied in roaming scenarios, where AF and AAnF are located in the home network of the terminal, and the terminal and proxy entity are located in the service network.

The terminal can be represented by UE, and the proxy entity in the service network can be represented by AAnFProxy. The coverage areas of the home network and the service network are different, or the same, or overlap.

In some embodiments, the AAnFProxy is a standalone network function (NF) in the service network, or the AAnFProxy is a part of any NF in the service network; or the AAnFProxy is a Trusted Application Function (Trusted AF) within the 3GPP operator domain.

In some embodiments, the terminal type includes but is not limited to handheld devices, wearable devices, in vehicle devices, and IoT devices. The terminal may be at least one of a mobile phone, tablet, e-book reader, laptop, desktop computer, television, game console, augmented reality (AR) terminal, virtual reality (VR) terminal, mixed reality (MR) terminal, wearable device, joystick, and controller.

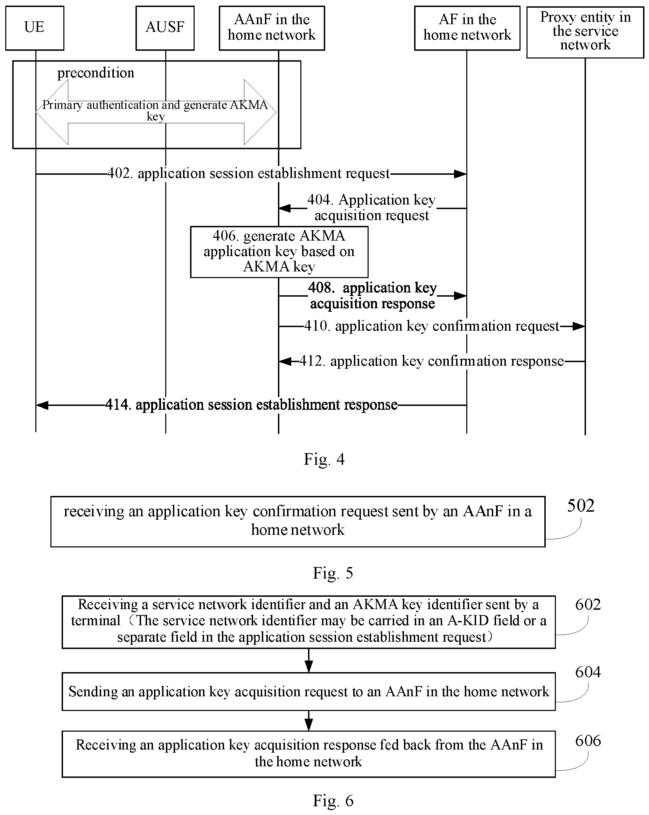

Fig. 4 shows a flowchart of a key management method provided by an embodiment of the present disclosure. This method is applied in roaming scenarios and can be applied to the system shown in Fig. 3. The method includes followings.

Step 402: The terminal sends an application session establishment request to the AF in the home network.

For example, it is necessary to determine whether AKMA services can be used between the AF in the home network and the terminal before they can communicate. Before step 402, the primary authentication process between the terminal and AUSF is used to generate the same KAUSF, KAKMA, and A-KID locally for both the terminal and AUSF. With respect to the primary authentication process, reference can be made to the above content and will not be repeated.

Optionally, the prerequisite for communication between the AF in the home network and the terminal is implicitly specific to both the terminal and the AF, or explicitly indicated by the AF to the terminal.

For example, the application session establishment request is used to trigger an establishment request for an application session, and the application session establishment request can be represented by Application Session Establishment Request. The application session establishment request carries an AKMA key identifier and a service network identifier, and the AKMA key identifier can be represented by A-KID.

A-KID is the identifier of the AKMA key of the terminal, and the service network identifier is used to indicate the service network of the terminal, which is used to trigger AAnF in the home network to send an application key confirmation request to the proxy entity in the service network when the service network identifier of the terminal is different from the home network identifier.

Optionally, TS 33.535 defines that A-KID should adopt the format of Network Access Identifier (NAI) specified in Article 2.2 of the Request For Comments (RFC) 7542 of The Internet Engineering Task Force (IETF), such as user name @ security domain. The username section should include the Routing Indicator (RID) and AKMA Temporary UE Identifier (A-TID), and the security domain section should include the home network identifier.

Optionally, the application session establishment request carrying the service network identifier of the terminal may include the following at least two situations.

Situation 1: The application session establishment request includes the AKMA key identifier of AKMA, and the AKMA key identifier carries the service network identifier.

Situation 2: The application session establishment request includes the AKMA key identifier and the service network identifier. The AKMA key identifier is the identifier of the AKMA key of the terminal.

Optionally, the application session establishment request includes A-KID, and the terminal can also send its service network identifier separately before or after the application session establishment request. Optionally, the service network identifier indicates the corresponding application session establishment request or A-KID.

Step 404: The AF in the home network sends an application key acquisition request to the AAnF in the home network.

The application key acquisition request carries the service network identifier of the terminal. After receiving the application session establishment request sent by the terminal, the AF in the home network will send the application key acquisition request to the AAnF in the home network. This application key acquisition request is used to request AKMA application key information of AF in the home network from AAnF in the home network.

In step 404, the application key acquisition requests sent by the AF in the home network to the AAnF in the home network are also different according to the different policies in the AF in the home network.

The case where AF in the home network requires terminal identification:
In the case where the AF in the home network requires terminal identification, the AF in the home network sends a first application key acquisition request to the AAnF in the home network. For example, the first application key acquisition request can be represented using Naanf_AKMA _ApplicationKey_Get Request.

Optionally, the first application key acquisition request includes at least one of the following:
· AKMA key identifier;
· AF identifier.

The AKMA key identifier is the identifier of the AKMA key of the terminal, and the AF identifier is the identifier of the AF in the home network. For example, the AKMA key identifier can be represented by A-KID, and the AF identifier can be represented by AF_ID. A-KID is obtained from the terminal by the AF in the home network. Optionally, AF_ID contains the Fully Qualified Domain Name (FQDN) and Ua* security protocol identifier of AF. The Ua* security protocol identifier is used to indicate the security protocol that AF will use with UE.

Optionally, the first application key acquisition request includes the AKMA key identifier and the service network identifier (and may also include the AF identifier). The AKMA key identifier carries the service network identifier; or the first application key acquisition request carries the service network identifier through a separate field. That is, the first application key acquisition request can carry the service network identifier through the above two methods.

The case where AF in the home network does not require terminal identification:
In the case where the AF in the home network does not require terminal identification, the AF in the home network sends a second application key acquisition request to the AAnF in the home network. As an example, the second application key acquisition request can be represented using Naanf_AKMA_ApplicationKey_AnonUser_Get Request.

Optionally, the second application key acquisition request includes at least one of the following:
· AKMA key identifier;
· AF identifier.

The AKMA key identifier is the identifier of the AKMA key of the terminal, and the AF identifier is the identifier of the AF in the home network. With respect to the relevant descriptions of A-KID and AF_ID, reference can be made to the previous content and will not be repeated here.

Optionally, the second application key acquisition request includes the AKMA key identifier and the service network identifier (and may also include the AF identifier). The AKMA key identifier carries the service network identifier; or the second application key acquisition request carries the service network identifier through a separate field. That is, the second application key acquisition request can carry the service network identifier through the above two methods.

Optionally, whether the AF in the home network requires terminal identification is indicated by the policy in the AF in the home network.

Optionally, the AKMA key identifier adopts the Network Access Identifier (NAI) format. For example, TS 33.535 specifies that A-KID should use the Network Access Identifier (NAI) format specified in clause 2.2 of IETF RFC 7542, such as username @ security domain. The username section should include the Routing Indicator (RID) and AKMA Temporary UE Identifier (A-TID), and the security domain section should include the home network identifier.

Optionally, before executing step 103, the AF in the home network also needs to determine the AAnF in the home network, for example, the AF in the home network discovers the AAnF in the home network through the NRF in the home network.

Step 406: The AAnF in the home network generates the AKMA application key for the AF in the home network based on the AKMA key of the terminal.

The AKMA Application Key (KAF) is used to indicate the communication key between the terminal and the AF in the home network. For example, the AKMA application key is generated based on the AKMA key of the terminal. Therefore, executing step 406 requires the following condition to be met: the AAnF in the home network stores the AKMA key of the terminal.

The acquisition of AKMA application key can be achieved through the following method: AAnF in the home network obtains A-KID and AF_ID according to the application key acquisition request. Afterwards, AAnF in the home network can generate the AKMA application key based on the AKMA key and AF_ID.

Optionally, the AAnF in the home network can verify whether the terminal is authorized to use AKMA services based on the existence of the AKMA key of the terminal corresponding to the A-KID.

Optionally, before executing step 406, the AAnF in the home network also needs to perform the following steps: based on authorization information or policy, determining that the AAnF in the home network provides services to the AF in the home network and the proxy entity in the service network. Optionally, the authorization information or policy can be provided by the local policy or NRF in the home network. For example, the AAnF in the home network determines whether it can provide services to the AF in the home network and the proxy entity in the service network based on the authorization information or policy associated with AF_ID.

In the case where the AAnF in the home network can provide services to the AF in the home network and the proxy entity in the service network, the AAnF in the home network performs step 406; in the case where the AAnF in the home network cannot provide services to the AF in the home network and the proxy entity in the service network, the AAnF in the home network may refuse to perform step 406 and provide an error response to the AF in the home network.

Step 408: The AAnF in the home network feeds back the application key acquisition response to the AF in the home network.

The application key acquisition response includes AKMA application key information of the AF in the home network. Optionally, the AKMA application key information includes at least one of the following:
· AKMA application key;
· expiration time of AKMA application key;
· Subscription Permanent Identifier (SUPI) of the terminal.

Optionally, if the AKMA key of the terminal is not stored in the AAnF in the home network, the AAnF in the home network provides an error response to the AF in the home network.

According to step 404, the application key acquisition request sent by the AF in the home network to the AAnF in the home network may be different. Correspondingly, the application key acquisition response sent by AAnF in the home network to AF accessing the home network is also different.

The case where AF in the home network requires terminal identification:
Optionally, in the case where the AF in the home network requires terminal identification, the AAnF in the home network will receive the first application key acquisition request. After generating the AKMA application key, the AAnF in the home network sends the first application key acquisition response to the AF in the home network.

Optionally, the first application key acquisition response can be represented using Naanf_AKMA _ApplicationKey_Get Response.

The AKMA application key information of AF carried in the first application key acquisition response includes at least one of the following information: AKMA application key, expiration time of AKMA application key, and SUPI of the terminal. The expiration time of AKMA application key can be represented using KAF expTime.

The case where AF in the home network does not require terminal identification:
Optionally, in the case where the AF in the home network does not require terminal identification, the AAnF in the home network will receive the second application key acquisition request. After generating the AKMA application key, the AAnF in the home network sends a second application key acquisition response to the AF in the home network.

Optionally, the second application key acquisition response can be represented using Naanf_AKMA_ApplicationKey_AnonU_ser_Get Response.

Optionally, in the case where the AAnF in the home network receives the second application key acquisition request, the AKMA application key information fed back by the AAnF in the home network does not include the SUPI of the terminal, that is, the second application key acquisition response does not include the SUPI of the terminal. The AKMA application key information of AF carried in the second application key acquisition response includes at least one of the following information: AKMA application key, expiration time of AKMA application key.

Step 410: The AAnF in the home network sends an application key confirmation request to the proxy entity in the service network.

The application key confirmation request can be represented by AKMA Application Key Comfirmation Request. Optionally, in the case where the service network identifier of the terminal is different from the home network identifier, i.e. the terminal is roaming, the AAnF in the home network will send the application key confirmation request to the proxy entity in the service network. If the service network identifier of the terminal is the same as the home network identifier, step 410 will not be executed, but step 414 will be executed directly after step 408.

Optionally, the AAnF in the home network sends the application key confirmation request to the proxy entity in the service network before, after, or simultaneously with the feedback of the application key acquisition response from the AAnF in the home network to the AF in the home network. Optionally, the application key confirmation request includes at least one of the following:
· AKMA application key;
· expiration time of AKMA application key;
· AF identifier;
· AKMA key identifier;
· SUPI of the terminal.

The AF identifier is the identifier of the AF in the home network, and the AKMA key identifier is the identifier of the AKMA key of the terminal. Optionally, the AKMA key identifier stores the home network identifier of the terminal.

It should be noted that in the case where the service network identifier of the terminal is different from the home network identifier, the AAnF in the home network needs to first determine the proxy entity in the network elements of the service network before sending the application key confirmation request to the proxy entity in the service network. Optionally, in the case where the service network identifier of the terminal is different from the home network identifier, the AAnF in the home network discovers the proxy entity in the service network through the NRF in the service network and the home network in the network elements of the service network.

Taking the NRF in the home network represented by hNRF and the NRF in the service network represented by vNRF as an example, the process of AAnF in the home network discovering the proxy entity in the service network can be implemented as follows: AAnF in the home network determines hNRF through the service network identifier; HNRF can determine vNRF based on the service network identifier transmitted by AAnF in the home network; VNRF determines that AAnF in the home network has the authority to serve AF in the home network based on the preset policy, and then authorizes AAnF in the home network to access the proxy entity in the service network. The information of the proxy entity in the service network is locally configured in the AAnF of the home network. At this point, AAnF in the home network does not need to discover the proxy entity in the service network through NRF.

Optionally, the above proxy entity in the service network is a separate NF in the service network; or, the proxy entity in the service network is a part of any NF in the service network; or, the proxy entity in the service network is a trusted application function within the 3GPP operator domain.

Step 412: The proxy entity in the service network sends an application key confirmation response to the AAnF in the home network.

The application key confirmation response can be represented by AKMA Application Key Confirmation Response. The application key confirmation response is used by the proxy entity in the service network to notify the AAnF in the home network that it has learned that the terminal can establish AKMA based communication with the AF in the home network, as well as relevant AKMA application key information. Optionally, upon receiving the application key confirmation request sent by the AAnF in the home network, the proxy entity in the service network will store the application key confirmation request and then send the application key confirmation response to the AAnF in the home network.

Step 414: The AF in the home network feeds back an application session establishment response to the terminal.

The application session establishment response corresponds to the application session establishment request and is used to feed back the AKMA application key information of the AF in the home network, and can be represented by Application Session Establishment Response. After receiving the application session establishment response, the terminal can determine the AKMA application key based on the AKMA application key information of the AF carried in the application session establishment response.

In one implementation scenario, the AAnF in the home network does not carry the AKMA key of the terminal.

In this case, the AAnF in the home network sends an error response to the AF in the home network. In the case of receiving an error response fed back from the AAnF in the home network, the AF in the home network will provide the terminal with rejection information for the application session, in which the rejection information includes the response failure reason. Based on this, the AF in the home network refuse to establish the application session by including the response failure reason.

Optionally, after receiving the rejection information for the application session fed back from the AF in the home network, the terminal can resend an application session establishment request carrying a new A-KID and/or service network identifier.

It should be understood that in the embodiment provided above, the steps on the UE side can be considered as a separate embodiment of the key management method applied to the terminal, the steps on the AAnF side in the home network can be considered as a separate embodiment of the key management method applied to the AAnF side in the home network, the steps on the AF side in the home network can be considered as a separate embodiment of the key management method applied to the AF side in the home network, and the steps on the proxy entity side in the service network can be considered as a separate embodiment of the key management method applied to the proxy entity in the service network. With respect to the specific explanation of the steps of the key management method, reference can be made to the above content and will not be repeated.

In summary, with the method provided in this embodiment, in a roaming scenario, the terminal sends the service network identifier to the AF in the home network, and the AF in the home network sends the application key acquisition request carrying the service network identifier to the AAnF in the home network, so that the AAnF in the home network can determine the proxy entity in the network elements of the service network when determining based on the service network identifier that the terminal is in a roaming scenario, and send the application key confirmation request to it, so that the relevant network elements in the service network know that the terminal can establish AKMA based communication with the AF in the home network, thereby providing AKMA services in the roaming scenario.

Fig. 5 shows a flowchart of a key management method provided in an embodiment of the present disclosure. This method is applied in a roaming scenario and can be applied to a proxy entity in the service network. The method includes the followings.

Step 502: receiving the application key confirmation request sent by AAnF in the home network.

The application key confirmation request can be represented by AKMA Application Key Comfirmation Request. The application key confirmation request is sent by the AAnF in the home network to the proxy entity in the service network, in the case that the AAnF in the home network determines the AKMA application key of the AF in the home network based on the application key acquisition request sent by the AF in the home network, and feeds back the application key acquisition response to the AF in the home network. This application key confirmation request is used by AAnF in the home network to notify the proxy entity in the service network that in the roaming scenario, the terminal can establish AKMA based communication with AF in the home network, as well as related AKMA application key information.

Optionally, the application key confirmation request is sent by the AAnF in the home network to the proxy entity in the service network when the service network identifier of the terminal is different from the home network identifier, that is, when the terminal is roaming. The terminal will send the service network identifier to the AF in the home network, and the application key acquisition request sent by the AF in the home network to the AAnF in the home network carries the service network identifier. The AAnF in the home network can determine whether the terminal is roaming based on the service network identifier.

Optionally, the AKMA key identifier stores the service network identifier of the terminal. The terminal sends the AKMA key identifier to the AF in the home network, thereby achieving the sending of the service network identifier to the AF in the home network. The service network identifier of the terminal can also be directly sent by the terminal to the AF in the home network. For example, the terminal sends an application session establishment request to the AF in the home network, which includes the AKMA key identifier and the service network identifier. Or, the terminal sends the service network identifier separately before or after sending the application session establishment request to the AF in the home network. This service network identifier is used to trigger the AAnF in the home network to send the application key confirmation request to the proxy entity in the service network when the service network identifier of the terminal is different from the home network identifier.

Optionally, the application key confirmation request includes at least one of the following:
· AKMA application key;
· expiration time of AKMA application key;
· AF identifier;
· AKMA key identifier;
· SUPI of the terminal.

The AF identifier is the identifier of the AF in the home network, and the AKMA key identifier is the identifier of the AKMA key of the terminal. Optionally, the AKMA key identifier stores the home network identifier of the terminal.

Optionally, the proxy entity in the service network will also send an application key confirmation response to the AAnF in the home network after receiving the application key confirmation request sent by the AAnF in the home network. Optionally, the proxy entity in the service network will first store the application key confirmation request and then send the application key confirmation response to the AAnF in the home network. The application key confirmation response can be represented by AKMA Application Key Confirmation Response.

Optionally, the proxy entity in the service network is determined by the AAnF in the home network in the network elements of the service network when the service network identifier of the terminal is different from the home network identifier. For example, the proxy entity in the service network is discovered by the AAnF in the network elements of the service network through the network storage function NRF in the service network and the home network, when the service network identifier of the terminal is different from the home network identifier. Alternatively, the information of the proxy entity in the service network is locally configured in the AAnF of the home network. At this point, AAnF in the home network does not need to discover the proxy entity in the service network through NRF.

Optionally, the above proxy entity in the service network is a separate NF in the service network; or the proxy entity in the service network is a part of any NF in the service network; or the proxy entity in the service network is a trusted application function within the 3GPP operator domain.

In summary, with the method provided in this embodiment, in a roaming scenario, the AAnF in the home network sends the application key confirmation request to the proxy entity in the service network, so that the relevant network elements in the service network can know that the terminal can establish AKMA based communication with the AF in the home network in the roaming scenario, thereby providing AKMA services in the roaming scenario.

Fig. 6 shows a flowchart of a key management method provided in an embodiment of the present application. This method is applied in a roaming scenario and can be applied to AF in the home network. The method includes the followings.

Step 602: Receiving the service network identifier and AKMA key identifier sent by the terminal.

For example, the service network identifier is used to indicate the service network of the terminal, and is used to trigger the AAnF in the home network to send an application key confirmation request to the proxy entity in the service network when the service network identifier of the terminal is different from the home network identifier. The AKMA key identifier is the identifier of the AKMA key of the terminal.

In an optional implementation scenario, the terminal moves from the coverage area of the home network to the coverage area of the service network. At this point, the terminal sends the service network identifier to the AF in the home network, in which the service network identifier corresponds to the service network, indicating that the terminal is in a roaming scenario.

The service network identifier can be sent separately by the terminal to the AF in the home network, or carried in the application session establishment request sent by the terminal to the AF in the home network. For example, the AF in the home network receives the application session establishment request sent by the terminal, in which the application session establishment request carries the service network identifier.

The service network identifier can be carried by the AKMA key identifier in the application session establishment request, or by a dedicated field. For example, the application session establishment request includes the AKMA key identifier of AKMA, which carries the service network identifier; or, the application session establishment request includes the AKMA key identifier and the service network identifier. The AKMA key identifier is the identifier of the AKMA key of the terminal. The application session establishment request is used to trigger the establishment request for application session, and can be represented by Application Session Establishment Request.

Step 604: Sending an application key acquisition request to the AAnF in the home network.

The application key acquisition request carries the service network identifier of the terminal. After receiving the service network identifier (application session establishment request) sent by the terminal, the AF in the home network will send the application key acquisition request to the AAnF in the home network. This application key acquisition request is used to request AKMA application key information of AF in the home network from the AAnF in the home network.

Optionally, the application key acquisition requests sent by the AF in the home network to the AAnF in the home network may vary depending on the policies in the AF in the home network.

The case where AF in the home network requires terminal identification:
In the case where the AF in the home network requires terminal identification, the AF in the home network sends a first application key acquisition request to the AAnF in the home network. For example, the first application key acquisition request can be represented using Naanf_AKMA _ApplicationKey_Get Request.

Optionally, the first application key acquisition request includes at least one of the following:
· AKMA key identifier;
· AF identifier.

The AKMA key identifier is the identifier of the AKMA key of the terminal, and the AF identifier is the identifier of the AF in the home network. Optionally, the first application key acquisition request includes the AKMA key identifier and the service network identifier (and may also include the AF identifier). The AKMA key identifier carries the service network identifier; or the first application key acquisition request carries the service network identifier through a separate field. That is, the first application key acquisition request can carry the service network identifier through the above two methods.

The case where AF in the home network does not require terminal identification:
In the case where the AF in the home network does not require a terminal identifier, the AF in the home network sends a second application key acquisition request to the AAnF in the home network. As an example, the second application key acquisition request can be represented using Naanf_AKMA _ApplicationKey_AnonUser_Get Request.

Optionally, the second application key acquisition request includes at least one of the following:
· AKMA key identifier;
· AF identifier.

The AKMA key identifier is the identifier of the AKMA key of the terminal, and the AF identifier is the identifier of the AF in the home network. Optionally, the second application key acquisition request includes the AKMA key identifier and the service network identifier (and may also include the AF identifier). The AKMA key identifier carries the service network identifier; or the second application key acquisition request carries the service network identifier through a separate field. That is, the second application key acquisition request can carry the service network identifier through the above two methods.

Optionally, whether the AF in the home network requires terminal identification is indicated by the policy in the AF in the home network.

Optionally, the AKMA key identifier adopts the Network Access Identifier (NAI) format. Optionally, the AF in the home network also needs to determine the AAnF in the home network, for example, the AF in the home network discovers the AAnF in the home network through the NRF in the home network.

Step 606: receiving the application key acquisition response fed back from the AAnF in the home network.

The application key acquisition response includes AKMA application key information of the AF in the home network. In the case where the AAnF in the home network stores the AKMA key of the terminal, the AAnF in the home network will generate the AKMA application key of the AF in the home network based on the AKMA key of the terminal. The AKMA application key is used to indicate the communication key between the terminal and the AF in the home network.

Optionally, the AKMA application key information mentioned above includes at least one of the following:
· AKMA application key;
· expiration time of AKMA application key;
· SUPI of the terminal.

In step 604, the application key acquisition request sent by the AF in the home network to the AAnF in the home network may be different. Correspondingly, the application key acquisition response sent by AAnF in the home network to AF accessing the home network is also different.

The case where AF in the home network requires terminal identification:
Optionally, in the case where the AF in the home network requires terminal identification, the AAnF in the home network will receive the first application key acquisition request. After generating the AKMA application key, the AAnF in the home network sends the first application key acquisition response to the AF in the home network.

Optionally, the first application key acquisition response can be represented using Naanf_AKMA _ApplicationKey_Get Response.

The AKMA application key information of AF carried in the first application key acquisition response includes at least one of the following information: AKMA application key, expiration time of AKMA application key, and SUPI of the terminal. The expiration time of AKMA application key can be represented using KAF expTime.

The case where AF in the home network does not require terminal identification:
Optionally, in the case where the AF in the home network does not require terminal identification, the AAnF in the home network will receive a second application key acquisition request. After generating the AKMA application key, the AAnF in the home network sends a second application key acquisition response to the AF in the home network.

Optionally, the second application key acquisition response can be represented using Naanf_AKMA_ApplicationKey_AnonUser_Get Response.

Optionally, in the case where the AAnF in the home network receives the second application key acquisition request, the AKMA application key information fed back by the AAnF in the home network does not include the SUPI of the terminal, that is, the second application key acquisition response does not include the SUPI of the terminal. The AKMA application key information of AF carried in the second application key acquisition response includes at least one of the following information: AKMA application key, expiration time of AKMA application key.

When the AF in the home network receives an application session establishment request sent by the terminal, it will obtain a response based on the above application key and feed back the application session establishment response to the terminal.

Optionally, in the case where the AKMA key of the terminal is not stored in the AAnF in the home network, the AF in the home network will receive an error response fed back from the AAnF in the home network, which is sent when the AKMA key of the terminal is not stored in the AAnF in the home network. In this case, the AF in the home network will send an error response to the terminal. For example, in the case of receiving an error response fed back from AAnF in the home network, the AF in the home network will provide the terminal with rejection information for the application session, which includes the response failure reason.

In summary, with the method provided in this embodiment, in a roaming scenario, the terminal sends the service network identifier to the AF in the home network, and the AF in the home network sends the application key acquisition request carrying the service network identifier to the AAnF in the home network, so that the AAnF in the home network can send the application key confirmation request to the proxy entity in the service network when determining based on the service network identifier that the terminal is in a roaming scenario. This allows the relevant network elements in the service network to know that the terminal and the AF in the home network can establish AKMA based communication, thereby providing AKMA services in the roaming scenario.

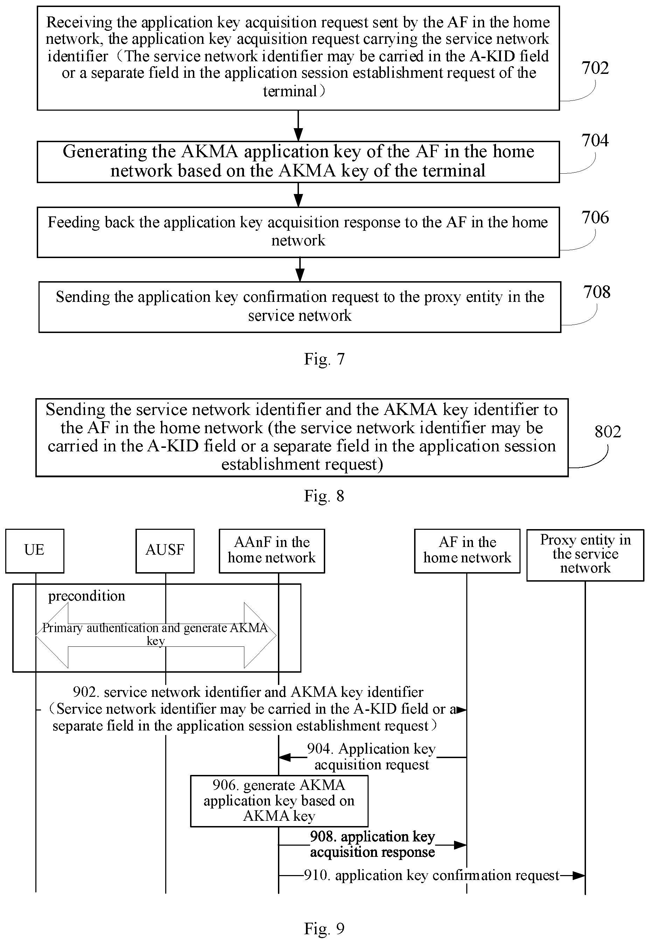

Fig. 7 shows a flowchart of a key management method provided in an embodiment of the present application. This method is applied in a roaming scenario and can be applied to AAnF in the home network. The method includes the followings.

Step 702: Receiving the application key acquisition request sent by the AF in the home network, wherein the application key acquisition request carries the service network identifier.

The application key acquisition request carries the service network identifier of the terminal. This service network identifier is used to trigger AAnF in the home network to send an application key confirmation request to the proxy entity in the service network when the service network identifier of the terminal is different from the home network identifier.

After receiving the application session establishment request sent by the terminal, the AF in the home network will send the application key acquisition request to the AAnF in the home network. This application key acquisition request is used to request AKMA application key information of AF in the home network from AAnF in the home network.

Optionally, the application key acquisition requests sent by the AF in the home network to the AAnF in the home network may vary depending on the policies in the AF.

The case where AF in the home network requires terminal identification:
When the AF in the home network requires terminal identification, the AF in the home network sends a first application key acquisition request to the AAnF in the home network. For example, the first application key acquisition request can be represented using Naanf_AKMA _ApplicationKey_Get Request.

Optionally, the first application key acquisition request includes at least one of the following:
· AKMA key identifier;
· AF identifier.

The AKMA key identifier is the identifier of the AKMA key of the terminal, and the AF identifier is the identifier of the AF in the home network. For example, the AKMA key identifier can be represented by A-KID, and the AF identifier can be represented by AF_ID. Optionally, the first application key acquisition request includes the AKMA key identifier and the service network identifier (and may also include the AF identifier). The AKMA key identifier carries the service network identifier; or the first application key acquisition request carries the service network identifier through a separate field. That is, the first application key acquisition request can carry the service network identifier through the above two methods.

The case where AF in the home network does not require terminal identification:
In the case where the AF in the home network does not require terminal identification, the AF in the home network sends a second application key acquisition request to the AAnF in the home network. As an example, the second application key acquisition request can be represented using Naanf_AKMA_ApplicationKey_AnonUser_Get Request.

Optionally, the second application key acquisition request includes at least one of the following:
· AKMA key identifier;
· AF identifier.

The AKMA key identifier is the identifier of the AKMA key of the terminal, and the AF identifier is the identifier of the AF in the home network. Optionally, the second application key acquisition request includes the AKMA key identifier and the service network identifier (and may also include the AF identifier). The AKMA key identifier carries the service network identifier; or the second application key acquisition request carries the service network identifier through a separate field. That is, the second application key acquisition request can carry the service network identifier through the above two methods.

Optionally, whether the AF in the home network requires terminal identification is indicated by the policy in the AF in the home network.

Optionally, the AKMA key identifier adopts the Network Access Identifier (NAI) format.

Optionally, before executing step 702, the AF in the home network also needs to determine the AAnF in the home network. For example, AF in the home network discovers AAnF in the home network through NRF in the home network.

Step 704: Generating the AKMA application key for the AF in the home network based on the AKMA key of the terminal.

The AKMA application key is used to indicate the communication key between the terminal and the AF in the home network. For example, the AKMA application key is generated based on the AKMA key of the terminal. Therefore, in the case where the AAnF in the home network stores the AKMA key of the terminal, the AAnF in the home network generates the AKMA application key of the AF in the home network based on the AKMA key of the terminal.

The acquisition of AKMA application key can be achieved through the following method: AAnF in the home network obtains A-KID and AF_ID according to the application key acquisition request. Afterwards, AAnF in the home network can generate the AKMA application key based on the AKMA key and AF_ID.

Optionally, the AAnF in the home network can verify whether the terminal is authorized to use AKMA services based on the existence of the AKMA key of the terminal corresponding to the A-KID.

Optionally, before executing step 704, the AAnF in the home network needs to perform the following steps: based on authorization information or policy, determining that the AAnF in the home network provides services to the AF in the home network and the proxy entity in the service network. Optionally, the authorization information or policy can be provided by the local policy or NRF in the home network. For example, the AAnF in the home network determines whether it can provide services to the AF in the home network and the proxy entity in the service network based on the authorization information or policy associated with AF_ID.

In the case where the AAnF in the home network can provide services to the AF in the home network and the proxy entity in the service network, the AAnF in the home network performs step 704; in the case where the AAnF in the home network cannot provide services to the AF in the home network and the proxy entity in the service network, the AAnF in the home network may refuse to perform step 704 and provide an error response to the AF in the home network.

Step 706: Feeding back the application key acquisition response to the AF in the home network.

The application key acquisition response includes AKMA application key information of the AF in the home network. Optionally, the AKMA application key information includes at least one of the following:
· AKMA application key;
· expiration time of AKMA application key;
· SUPI of the terminal.

Optionally, if the AKMA key of the terminal is not stored in the AAnF in the home network, the AAnF in the home network will provide an error response to the AF in the home network.

Optionally, the application key acquisition request sent by the AF in the home network to AAnF in the home network may vary. Correspondingly, the application key acquisition response sent by AAnF in the home network to the AF accessing the home network also varies.

The case where AF in the home network requires terminal identification:
Optionally, in the case where the AF in the home network requires terminal identification, the AAnF in the home network will receive the first application key acquisition request. After generating the AKMA application key, the AAnF in the home network sends the first application key acquisition response to the AF in the home network.

Optionally, the first application key acquisition response can be represented using Naanf_AKMA _ApplicationKey_Get Response.

The AKMA application key information of AF carried in the first application key acquisition response includes at least one of the following information: AKMA application key, expiration time of AKMA application key, and SUPI of the terminal. The expiration time of AKMA application keys can be represented using KAF expTime.

The case where AF in the home network does not require terminal identification:
Optionally, in the case where the AF in the home network does not require terminal identification, the AAnF in the home network will receive a second application key acquisition request. After generating the AKMA application key, the AAnF in the home network sends a second application key acquisition response to the AF in the home network.

Optionally, the second application key acquisition response can be represented using Naanf_AKMA_ApplicationKey_AnonU_ser_Get Response.

Optionally, in the case where the AAnF in the home network receives the second application key acquisition request, the AKMA application key information fed back by the AAnF in the home network does not include the SUPI of the terminal, that is, the second application key acquisition response does not include the SUPI of the terminal. The AKMA application key information of AF carried in the second application key acquisition response includes at least one of the following information: AKMA application key, expiration time of AKMA application key.

Step 708: Sending an application key confirmation request to the proxy entity in the service network.

The application key confirmation request can be represented by AKMA Application Key Comfirmation Request. Optionally, in the case where the service network identifier of the terminal is different from the home network identifier, i.e. the terminal is roaming, the AAnF in the home network will send the application key confirmation request to the proxy entity in the service network. Optionally, the application key confirmation request includes at least one of the following:
· AKMA application key;
· expiration time of AKMA application key;
· AF identifier;
· AKMA key identifier;
· SUPI of the terminal.

The AF identifier is the identifier of the AF in the home network, and the AKMA key identifier is the identifier of the AKMA key of the terminal. Optionally, the AKMA key identifier stores the home network identifier of the terminal.

It should be noted that in the case where the service network identifier of the terminal is different from the home network identifier, the AAnF in the home network needs to first determine the proxy entity in the network elements of the service network before sending the application key confirmation request to the proxy entity in the service network. Optionally, in the case where the service network identifier of the terminal is different from the home network identifier, the AAnF in the home network discovers the proxy entity in the service network through the NRF in the service network and the home network in the network elements of the service network.

Optionally, the above proxy entity in the service network is a separate NF in the service network; or the proxy entity in the service network is a part of any NF in the service network; or the proxy entity in the service network is a trusted application function within the 3GPP operator domain.

Optionally, after sending the application key confirmation request to the proxy entity in the service network, the AAnF in the home network will also receive an application key confirmation response sent by the proxy entity in the service network. The application key confirmation response can be represented by AKMA Application Key Confirmation Response. Optionally, upon receiving the application key confirmation request sent by the AAnF in the home network, the proxy entity in the service network will store the application key confirmation request and then send the application key confirmation response to the AAnF in the home network.

In summary, with the method provided in this embodiment, in a roaming scenario, the application key acquisition request carrying the service network identifier sent by an AF in the home network is received, so that the AAnF in the home network can determine the proxy entity in the network elements of the service network when determining based on the service network identifier that the terminal is roaming, and send the application key confirmation request to it, so that the relevant network elements in the service network know that the terminal can establish AKMA based communication with the AF in the home network, thereby providing AKMA services in the roaming scenario.

Fig. 8 shows a flowchart of a key management method provided in an embodiment of the present application. This method is applied in a roaming scenario and can be applied to a terminal. The method includes the followings.

Step 802: Sending the service network identifier and AKMA key identifier to the AF in the home network.

The service network identifier is used to indicate the service network of the terminal, and the service network identifier is used to trigger AAnF in the home network to send an application key confirmation request to the proxy entity in the service network when the service network identifier of the terminal is different from the home network identifier. The AKMA key identifier is the identifier of the AKMA key of the terminal.

In an optional implementation scenario, the terminal moves from the coverage area of the home network to the coverage area of the service network. At this point, the terminal sends the service network identifier to the AF in the home network, in which the service network identifier corresponds to the service network, indicating that the terminal is in a roaming scenario.

The service network identifier can be sent separately by the terminal to the AF in the home network, or carried in the application session establishment request sent by the terminal to the AF in the home network. For example, the AF in the home network receives the application session establishment request sent by the terminal, in which the application session establishment request carries the service network identifier.

The service network identifier can be carried by the AKMA key identifier in the application session establishment request, or by a dedicated field. For example, the application session establishment request includes the AKMA key identifier of AKMA, which carries the service network identifier; or, the application session establishment request includes the AKMA key identifier and a service network identifier. The AKMA key identifier is the identifier of the AKMA key of the terminal. The application session establishment request is used to trigger the establishment request for application session, and the application session establishment request can be represented by Application Session Establishment Request.

After the terminal sends the application session establishment request to the AF in the home network, the AF in the home network will send the application key acquisition request to the AAnF in the home network. The application key acquisition request carries the service network identifier of the terminal. Afterwards, the AAnF in the home network generates the AKMA application key for the AF in the home network based on the AKMA key of the terminal, and feeds back the application key acquisition response to the AF in the home network, so that the AF in the home network feeds back the application session establishment response to the terminal. Moreover, in the case where the service network identifier of the terminal is different from the home network identifier, that is, when the terminal is roaming, the AAnF in the home network will send the application key confirmation request to the proxy entity in the service network. This application key confirmation request is used by AAnF in the home network to notify the proxy entity in the service network that in roaming scenarios, the terminal can establish AKMA based communication with AF in the home network, as well as related AKMA application key information.

In summary, with the method provided in this embodiment, in the roaming scenario, the terminal sends the service network identifier to the AF in the home network, so that the AAnF in the home network can send the application key confirmation request to the proxy entity in the service network when determining based on the service network identifier that the terminal is in the roaming scenario. This allows the relevant network elements in the service network to know that the terminal can establish AKMA based communication with the AF in the home network, thereby providing AKMA services in the roaming scenario.

Referring to Figs 5-8, Fig. 9 shows a flowchart of a key management method provided by an exemplary embodiment of the present application, applied in a roaming scenario. This method includes the followings.

Step 902: The terminal sends the service network identifier and AKMA key identifier to the AF in the home network.

The service network identifier is used to indicate the service network of the terminal, and the service network identifier is used to trigger AAnF in the home network to send the application key confirmation request to the proxy entity in the service network when the service network identifier of the terminal is different from the home network identifier. The AKMA key identifier is the identifier of the AKMA key of the terminal.

In an optional implementation scenario, the terminal moves from the coverage area of the home network to the coverage area of the service network. At this point, the terminal sends the service network identifier to the AF in the home network, in which the service network identifier corresponds to the service network, indicating that the terminal is in a roaming scenario.

The service network identifier can be sent separately by the terminal to the AF in the home network, or carried in the application session establishment request sent by the terminal to the AF in the home network. For example, the AF in the home network receives the application session establishment request sent by the terminal, wherein the application session establishment request carries the service network identifier.

The service network identifier can be carried by the AKMA key identifier in the application session establishment request, or by a dedicated field. For example, the application session establishment request includes the AKMA key identifier of AKMA, which carries the service network identifier; or, the application session establishment request includes the AKMA key identifier and the service network identifier. The AKMA key identifier is the identifier of the AKMA key of the terminal. The application session establishment request is used to trigger the establishment request for application session, and the application session establishment request can be represented by Application Session Establishment Request.

Step 904: The AF in the home network sends the application key acquisition request to the AAnF in the home network.

The application key acquisition request carries the service network identifier of the terminal. After receiving the application session establishment request sent by the terminal, the AF in the home network will send the application key acquisition request to the AAnF in the home network. This application key acquisition request is used to request AKMA application key information of AF in the home network from AAnF in the home network.

In step 904, the application key acquisition requests sent by the AF in the home network to the AAnF in the home network are also different according to the different policies in the AF in the home network.

The case where AF in the home network requires terminal identification:
When the AF in the home network requires terminal identification, the AF in the home network sends a first application key acquisition request to the AAnF in the home network. For example, the first application key acquisition request can be represented using Naanf_AKMA _ApplicationKey_Get Request.

Optionally, the first application key acquisition request includes at least one of the following:
· AKMA key identifier;
· AF identifier.

The AKMA key identifier is the identifier of the AKMA key of the terminal, and the AF identifier is the identifier of the AF in the home network. Optionally, the first application key acquisition request includes the AKMA key identifier and the service network identifier (and may also include the AF identifier). The AKMA key identifier carries the service network identifier; or the first application key acquisition request carries the service network identifier through a separate field. That is, the first application key acquisition request can carry the service network identifier through the above two methods.

The case where AF in the home network does not require terminal identification:
In the case where the AF in the home network does not require terminal identification, the AF in the home network sends a second application key acquisition request to the AAnF in the home network. As an example, the second application key acquisition request can be represented using Naanf_AKMA_ApplicationKey_AnonUser_Get Request.

Optionally, the second application key acquisition request includes at least one of the following:
· AKMA key identifier;
· AF identifier.

The AKMA key identifier is the identifier of the AKMA key of the terminal, and the AF identifier is the identifier of the AF in the home network. Optionally, the second application key acquisition request includes the AKMA key identifier and the service network identifier (and may also include the AF identifier). The AKMA key identifier carries the service network identifier; or the second application key acquisition request carries the service network identifier through a separate field. That is, the second application key acquisition request can carry the service network identifier through the above two methods.

Optionally, whether the AF in the home network requires terminal identification is indicated by the policy in the AF in the home network.

Optionally, the AKMA key identifier adopts the Network Access Identifier (NAI) format.

Optionally, before executing step 904, the AF in the home network also needs to determine the AAnF in the home network, for example, the AF in the home network discovers the AAnF in the home network through the NRF in the home network.

Step 906: The AAnF in the home network generates the AKMA application key for the AF in the home network based on the AKMA key of the terminal.

The AKMA application key is used to indicate the communication key between the terminal and the AF in the home network. For example, the AKMA application key is generated based on the AKMA key of the terminal. Therefore, executing step 906 requires the following condition to be met: the AAnF in the home network stores the AKMA key of the terminal.

The acquisition of AKMA application key can be achieved through the following method: AAnF in the home network obtains A-KID and AF_ID according to the application key acquisition request. Afterwards, AAnF in the home network can generate the AKMA application key based on the AKMA key and AF_ID.

Optionally, the AAnF in the home network can verify whether the terminal is authorized to use AKMA services based on the existence of the AKMA key of the terminal corresponding to the A-KID.

Optionally, before executing step 906, the AAnF in the home network also needs to perform the following steps: based on the authorization information or policy, determining that the AAnF in the home network provides services to the AF in the home network and the proxy entity in the service network. Optionally, the authorization information or policy can be provided by the local policies or NRF in the home network. For example, the AAnF in the home network determines whether it can provide services to the AF in the home network and the proxy entity in the service network based on the authorization information or policy associated with AF_ID.

In the case where the AAnF in the home network can provide services to the AF in the home network and the proxy entity in the service network, the AAnF in the home network performs step 906; on the case where the AAnF in the home network cannot provide services to the AF in the home network and the proxy entity in the service network, the AAnF in the home network may refuse to perform step 906 and provide an error response to the AF in the home network.

Step 908: The AAnF in the home network feeds back the application key acquisition response to the AF in the home network.

The application key acquisition response includes AKMA application key information of the AF in the home network. Optionally, the AKMA application key information includes at least one of the following:
· AKMA application key;
· expiration time of AKMA application key;
· SUPI of the terminal.

Optionally, if the AKMA key of the terminal is not stored in the AAnF in the home network, the AAnF in the home network will provide an error response to the AF in the home network.

The application key acquisition requests sent by AF in the home network to AAnF in the home network may be different. Correspondingly, the application key acquisition response sent by AAnF in the home network to AF accessing the home network is also different.

The case where AF in the home network requires terminal identification:
Optionally, in the case where the AF in the home network requires terminal identification, the AAnF in the home network will receive the first application key acquisition request. After generating the AKMA application key, the AAnF in the home network sends the first application key acquisition response to the AF in the home network.

Optionally, the first application key acquisition response can be represented using Naanf_AKMA _ApplicationKey_Get Response.

The AKMA application key information of AF carried in the first application key acquisition response includes at least one of the following information: AKMA application key, expiration time of AKMA application key, and SUPI of the terminal. The expiration time of AKMA application keys can be represented using KAF expTime.

The case where AF in the home network does not require terminal identification:
Optionally, in the case where the AF in the home network does not require a terminal identifier, the AAnF in the home network will receive a second application key acquisition request. After generating the AKMA application key, the AAnF in the home network sends a second application key acquisition response to the AF in the home network.

Optionally, the second application key acquisition response can be represented using Naanf_AKMA_ApplicationKey_AnonU_ser_Get Response.

Optionally, in the case where the AAnF in the home network receives the second application key acquisition request, the AKMA application key information fed back by the AAnF in the home network does not include the SUPI of the terminal, that is, the second application key acquisition response does not include the SUPI of the terminal. The AKMA application key information of AF carried in the second application key acquisition response includes at least one of the following information: AKMA application key, expiration time of AKMA application key.

Step 910: The AAnF in the home network sends an application key confirmation request to the proxy entity in the service network.

The application key confirmation request can be represented by AKMA Application Key Comfirmation Request. Optionally, in the case where the service network identifier of the terminal is different from the home network identifier, i.e. the terminal is roaming, the AAnF in the home network will send the application key confirmation request to the proxy entity in the service network. Optionally, the application key confirmation request includes at least one of the following:
· AKMA application key;
· expiration time of AKMA application key;
· AF identifier;
· AKMA key identifier;
· SUPI of the terminal.

The AF identifier is the identifier of the AF in the home network, and the AKMA key identifier is the identifier of the AKMA key of the terminal. Optionally, the AKMA key identifier stores the home network identifier of the terminal.

It should be noted that in the case where the service network identifier of the terminal is different from the home network identifier, the AAnF in the home network needs to first determine the proxy entity in the network elements of the service network before sending the application key confirmation request to the proxy entity in the service network. Optionally, in the case where the service network identifier of the terminal is different from the home network identifier, the AAnF in the home network discovers the proxy entity in the service network through the NRF in the service network and the home network in the network elements of the service network.

Taking the NRF in the home network represented by hNRF and the NRF in the service network represented by vNRF as an example, the process of AAnF in the home network discovering the proxy entity in the service network can be implemented as follows: AAnF in the home network determines hNRF through the service network identifier; HNRF can determine vNRF based on the service network identifier transmitted by AAnF in the home network; vNRF determines that AAnF in the home network has the authority to serve AF in the home network based on the preset policy, and then authorizes AAnF in the home network to access the proxy entity in the service network. The information of proxy entity in the service network is locally configured in the AAnF of the home network. At this point, AAnF in the home network does not need to discover the proxy entity in the service network through NRF.

Optionally, the above proxy entity in the service network is a separate NF in the service network; or the proxy entity in the service network is a part of any NF in the service network; or the proxy entity in the service network is a trusted application function within the 3GPP operator domain.

Optionally, the proxy entity in the service network will also send the application key confirmation response to the AAnF in the home network after receiving the application key confirmation request sent by the AAnF in the home network. The application key confirmation response can be represented by AKMA Application Key Confirmation Response. The application key confirmation response is used by the proxy entity in the service network to notify the AAnF in the home network that it has learned that the terminal can establish AKMA based communication with the AF in the home network, as well as relevant AKMA application key information. Optionally, upon receiving the application key confirmation request sent by the AAnF in the home network, the proxy entity in the service network will store the application key confirmation request and then send the application key confirmation response to the AAnF in the home network.

Optionally, the AF in the home network will also feed back the application session establishment response to terminal after receiving the application key acquisition response fed back from the AAnF in the home network. The application session establishment response corresponds to the application session establishment request and is used to feed back the AKMA application key information of the AF in the home network, and can be represented by Application Session Establishment Response. After receiving the application session establishment response, the terminal can determine the AKMA application key based on the AKMA application key information of the AF carried in the application session establishment response.

In one implementation scenario, the AAnF in the home network does not carry the AKMA key of the terminal. In this case, the AAnF in the home network sends an error response to the AF in the home network. In the case of receiving the error response fed back from the AAnF in the home network, the AF in the home network will provide the terminal with rejection information for the application session, wherein the rejection information includes the response failure reason. Based on this, the AF in the home network refuse to establish application sessions by including the response failure reason.

Optionally, after receiving the rejection information for the application session fed back from the AF in the home network, the terminal may resend an application session establishment request carrying a new A-KID and/or service network identifier.

It should be understood that in the embodiment given above, the steps on the UE side can be separately applied as an embodiment of the key management method applied to the terminal, the steps on the AAnF side in the home network can be separately applied as an embodiment of the key management method applied to the AAnF side in the home network, the steps on the AF side in the home network can be separately applied as an embodiment of the key management method applied to the AF side in the home network, and the steps on the proxy entity side in the service network can be separately applied as an embodiment of the key management method applied to the proxy entity in the service network. With respect to the specific explanation of the steps of the key management method, reference can be made to the above content and will not be repeated.

In summary, with the method provided in this embodiment, in a roaming scenario, the terminal sends the service network identifier to the AF in the home network, and the AF in the home network sends the application key acquisition request carrying the service network identifier to the AAnF in the home network, so that the AAnF in the home network can determine the proxy entity in the network elements of the service network when determining based on the service network identifier that the terminal is in the roaming scenario, and send the application key confirmation request to it, so that the relevant network elements in the service network know that the terminal can establish AKMA based communication with the AF in the home network, thereby providing AKMA services in the roaming scenario.

According to the above content, based on the different policies in the AF in the home network, the application key acquisition request and the application key acquisition response can be different, resulting in differences in the AKMA application key information of the AF in the home network.

Optionally, the AKMA application key information includes at least one of the following: the AKMA application key of the AF in the home network; the expiration time of AKMA application key; SUPI of the terminal. This situation is implemented when the AF in the home network requires terminal identification.

Optionally, the AKMA application key information includes at least one of the following: the AKMA application key of the AF in the service network; the expiration time of AKMA application key. This situation is implemented when the AF in the home network does not require terminal identification.

In the above two implementations, based on the different policies of the AF in the home network, it is determined whether the AF in the home network needs terminal identification, thereby determining the AKMA application key information of the AF that needs to be requested. The following will provide an example based on whether the AF in the home network requires terminal identification.

### I. the case where the AF in the home network requires terminal identification.

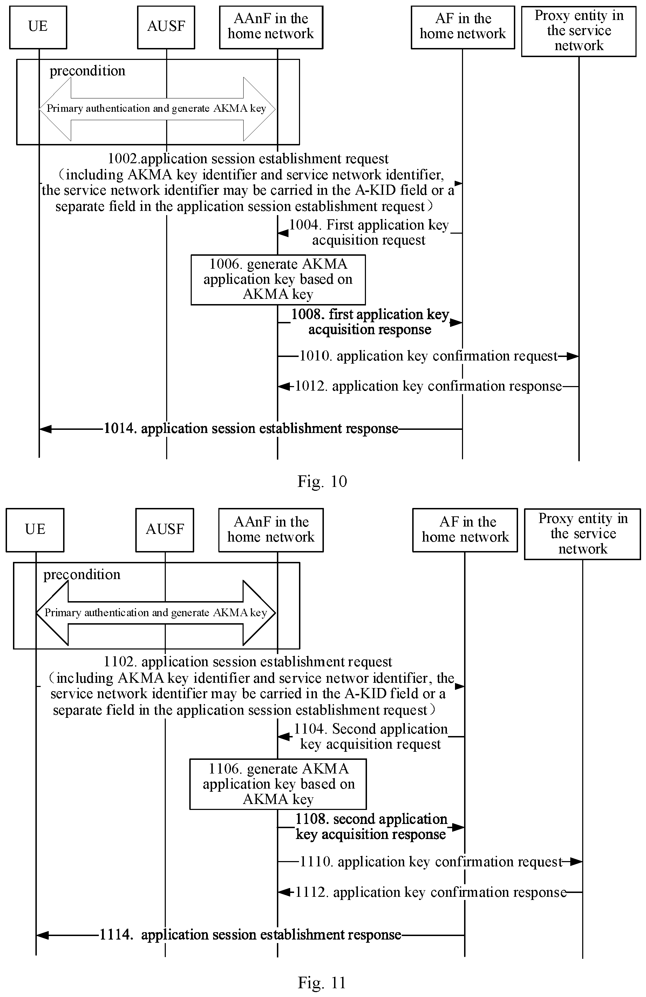

Fig. 10 shows a flowchart of a key management method provided by an exemplary embodiment of the present disclosure, applied in a roaming scenario. The method includes the followings.

Step 1002: The terminal sends an application session establishment request to the AF in the home network.

The application session establishment request is used to trigger the establishment request for the application session, and the application session establishment request can be represented by Application Session Establishment Request. The application session establishment request carries the AKMA key identifier and the service network identifier, and the AKMA key identifier can be represented by A-KID. A-KID is used to indicate the identifier of the AKMA key of the terminal, and the service network identifier is used to indicate the service network of the terminal.

Optionally, the application session establishment request carrying the service network identifier of the terminal may include the following at least two situations.

The first situation: the application session establishment request includes the AKMA key identifier of AKMA, and the AKMA key identifier carries the service network identifier.

The second situation: the application session establishment request includes the AKMA key identifier and the service network identifier. The AKMA key identifier is the identifier of the AKMA key of the terminal.

Optionally, the application session establishment request includes A-KID, and the terminal can also send its service network identifier before or after the application session establishment request. Optionally, the service network identifier indicates the corresponding application session establishment request or A-KID.

Step 1004: The AF in the home network sends a first application key acquisition request to the AAnF in the home network.

The first application key acquisition request carries the service network identifier of the terminal. The first application key acquisition request is used to request AKMA application key information of AF in the home network from AAnF in the home network.

When the AF in the home network requires terminal identification, the AF in the home network sends the first application key acquisition request to the AAnF in the home network. For example, the first application key acquisition request can be represented using Naanf_AKMA _ApplicationKey_Get Request.

Optionally, the first application key acquisition request includes at least one of the following:
· AKMA key identifier;
· AF identifier.

The AKMA key identifier is the identifier of the AKMA key of the terminal, and the AF identifier is the identifier of the AF in the home network. For example, the AKMA key identifier can be represented by A-KID, and the AF identifier can be represented by AF_ID. Optionally, the first application key acquisition request includes the AKMA key identifier and the service network identifier (and may also include the AF identifier). The AKMA key identifier carries the service network identifier; or the first application key acquisition request carries the service network identifier through a separate field. That is, the first application key acquisition request can carry the service network identifier through the above two methods.

Optionally, the AF in the home network requires terminal identification, which is indicated by the policy in the AF in the home network.

Optionally, the AKMA key identifier adopts the Network Access Identifier (NAI) format. Optionally, before executing step 1004, the AF in the home network also needs to determine the AAnF in the home network, i.e., the method provided in this embodiment further includes step 1003: the AF in the home network determines the AAnF in the home network. For example, AF in the home network discovers AAnF in the home network through NRF in the home network.

Step 1006: The AAnF in the home network generates the AKMA application key for the AF in the home network based on the AKMA key of the terminal.

The AKMA Application Key (KAF) is used to indicate the communication key between the terminal and the AF in the home network. For example, the AKMA application key is generated based on the AKMA key of the terminal. Therefore, executing step 1006 requires the following condition to be met: the AAnF in the home network stores the AKMA key of the terminal.

The acquisition of AKMA application key can be achieved through the following method: AAnF in the home network obtains A-KID and AF_ID according to the application key acquisition request. Afterwards, AAnF in the home network can generate the AKMA application key based on the AKMA key and AF_ID.

Optionally, the AAnF in the home network can verify whether the terminal is authorized to use AKMA services based on the existence of the AKMA key of the terminal corresponding to the A-KID.

Optionally, before executing step 1006, the AAnF in the home network needs to perform the following steps: based on the authorization information or policy, determining that the AAnF in the home network provides services to the AF in the home network and the proxy entity in the service network. The method provided in this embodiment further includes step 1005: the AAnF in the home network determines to provide services to the AF in the home network and the proxy entity in the service network based on the authorization information or policy. Optionally, the authorization information or policy can be provided by the local policies or NRF in the home network. For example, the AAnF in the home network determines whether it can provide services to the AF in the home network and the proxy entity in the service network based on the authorization information or policy associated with AF_ID.

In the case where the AAnF in the home network can provide services to the AF in the home network and the proxy entity in the service network, the AAnF in the home network performs step 1006; in the case where the AAnF in the home network cannot provide services to the AF in the home network and the proxy entity in the service network, the AAnF in the home network may refuse to perform step 1006 and provide an error response to the AF in the home network.

Step 1008: The AAnF in the home network feeds back a first application key acquisition response to the AF in the home network.

In the case where the AF in the home network requires terminal identification, the AAnF in the home network will receive the first application key acquisition request. After generating the AKMA application key, the AAnF in the home network sends the first application key acquisition response to the AF in the home network.

Optionally, the first application key acquisition response can be represented using Naanf_AKMA _ApplicationKey_Get Response.

The AKMA application key information of AF carried in the first application key acquisition response includes at least one of the following information: AKMA application key, expiration time of AKMA application key, and SUPI of the terminal. The expiration time of AKMA application keys can be represented using KAF expTime.

Optionally, if the AKMA key of the terminal is not stored in the AAnF in the home network, the AAnF in the home network will provide an error response to the AF in the home network.

Step 1010: The AAnF in the home network sends an application key confirmation request to the proxy entity in the service network.

The application key confirmation request can be represented by AKMA Application Key Comfirmation Request. Optionally, in the case where the service network identifier of the terminal is different from the home network identifier, i.e. the terminal is roaming, the AAnF in the home network will send the application key confirmation request to the proxy entity in the service network. Optionally, the application key confirmation request includes at least one of the following:
· AKMA application key;
· expiration time of AKMA application key;
· AF identifier;
· AKMA key identifier;
· SUPI of the terminal.

The AF identifier is the identifier of the AF in the home network, and the AKMA key identifier is the identifier of the AKMA key of the terminal. Optionally, the AKMA key identifier stores the home network identifier of the terminal.

It should be noted that in the case where the service network identifier of the terminal is different from the home network identifier, the AAnF in the home network needs to first determine the proxy entity in the network elements of the service network before sending the application key confirmation request to the proxy entity in the service network. That is, the method provided in this embodiment further includes step 1009: the AAnF in the home network determines the proxy entity in the network elements of the service network. Optionally, in the case where the service network identifier of the terminal is different from the home network identifier, the AAnF in the home network discovers the proxy entity in the service network through the NRF in the service network and the home network in the network elements of the service network. Alternatively, the information of proxy entity in the service network is locally configured in the AAnF of the home network. At this point, AAnF in the home network does not need to discover the proxy entity in the service network through NRF.

Optionally, the above proxy entity in the service network is a separate NF in the service network; or the proxy entity in the service network is a part of any NF in the service network; or the proxy entity in the service network is a trusted application function within the 3GPP operator domain.

Step 1012: The proxy entity in the service network sends an application key confirmation response to the AAnF in the home network.

The application key confirmation response can be represented by AKMA Application Key Confirmation Response. The application key confirmation response is used by the proxy entity in the service network to notify the AAnF in the home network that it has learned that the terminal can establish AKMA based communication with the AF in the home network, as well as relevant AKMA application key information. Optionally, upon receiving the application key confirmation request sent by the AAnF in the home network, the proxy entity in the service network will store the application key confirmation request and then send the application key confirmation response to the AAnF in the home network.

Step 1014: The AF in the home network feeds back the application session establishment response to the terminal.

The application session establishment response corresponds to the application session establishment request and is used to feed back the AKMA application key information of the AF in the home network, and can be represented by Application Session Establishment Response. After receiving the application session establishment response, the terminal can determine the AKMA application key based on the AKMA application key information of the AF carried in the application session establishment response.

In one implementation scenario, the AAnF in the home network does not carry the AKMA key of the terminal.

In this case, the AAnF in the home network sends an error response to the AF in the home network. In the case of receiving an error response fed back from the AAnF in the home network, the AF in the home network will provide the terminal with rejection information for the application session, wherein the rejection information includes the response failure reason. Based on this, the AF in the home network refuse to establish application sessions by including the response failure reason.

Optionally, after receiving the rejection information of the application session fed back from the AF in the home network, the terminal may resend an application session establishment request carrying a new A-KID and/or service network identifier.

It should be understood that in the embodiments given above, the steps on the UE side can be separately applied as an embodiment of the key management method applied to the terminal, the steps on the AAnF side in the home network can be separately applied as an embodiment of the key management method applied to the AAnF side in the home network, the steps on the AF side in the home network can be separately applied as an embodiment of the key management method applied to the AF side in the home network, and the steps on the proxy entity side in the service network can be separately applied as an embodiment of the key management method applied to the proxy entity in the service network. With respect to the specific explanation of the steps of the key management method, reference can be made to the above content and will not be repeated.

In summary, with the method provided in this embodiment, in the roaming scenario, the terminal sends the service network identifier to the AF in the home network, and the AF in the home network sends the application key acquisition request carrying the service network identifier to the AAnF in the home network, so that the AAnF in the home network can determine the proxy entity in the network elements of the service network when determining based on the service network identifier that the terminal is in the roaming scenario, and send the application key confirmation request to it, so that the relevant network elements in the service network know that the terminal can establish AKMA based communication with the AF in the home network, thereby providing AKMA services in the roaming scenario.

### II. The case where the AF in the home network does not require terminal identification

Fig. 11 shows a flowchart of a key management method provided by an exemplary embodiment of the present disclosure, applied in a roaming scenario. The method includes the followings.

Step 1102: The terminal sends an application session establishment request to the AF in the home network.

The application session establishment request is used to trigger the establishment request for the application session, and the application session establishment request can be represented by Application Session Establishment Request. The application session establishment request carries the AKMA key identifier and the service network identifier, and the AKMA key identifier can be represented by A-KID. A-KID is used to indicate the identifier of the AKMA key of the terminal, and the service network identifier is used to indicate the service network of the terminal.

Optionally, the application session establishment request carrying the service network identifier of the terminal may include the following at least two situations.

The first situation: the application session establishment request includes the AKMA key identifier of AKMA, and the AKMA key identifier carries the service network identifier.

The second situation: the application session establishment request includes the AKMA key identifier and the service network identifier. The AKMA key identifier is the identifier of the AKMA key of the terminal.

Optionally, the application session establishment request includes A-KID, and the terminal can also send its service network identifier before or after the application session establishment request. Optionally, the service network identifier indicates the corresponding application session establishment request or A-KID.

Step 1104: The AF in the home network sends a second application key acquisition request to the AAnF in the home network.

The second application key acquisition request carries the service network identifier of the terminal. The second application key acquisition request is used to request AKMA application key information of AF in the home network from AAnF in the home network.

When the AF in the home network does not require terminal identification, the AF in the home network sends the second application key acquisition request to the AAnF in the home network. For example, the second application key acquisition request can be represented using Naanf_AKMA_ApplicationKey_AnonUser_Get Request.

Optionally, the second application key acquisition request includes at least one of the following:
· AKMA key identifier;
· AF identifier.

The AKMA key identifier is the identifier of the AKMA key of the terminal, and the AF identifier is the identifier of the AF in the home network. With respect to the related description of A-KID and AF_ID, reference can be made to the aforementioned content, which will not be repeated here. Optionally, the second application key acquisition request includes the AKMA key identifier and the service network identifier (and may also include the AF identifier). The AKMA key identifier carries the service network identifier; or the second application key acquisition request carries the service network identifier through a separate field. That is, the second application key acquisition request can carry the service network identifier through the above two methods.

Optionally, the AF in the home network does not require terminal identification, which is indicated by the policy in the AF in the home network.

Optionally, the AKMA key identifier adopts the Network Access Identifier (NAI) format. Optionally, before executing step 1104, the AF in the home network also needs to determine the AAnF in the home network, i.e., the method provided in this embodiment further includes step 1103: the AF in the home network determines the AAnF in the home network. For example, AF in the home network discovers AAnF in the home network through NRF in the home network.

Step 1106: The AAnF in the home network generates the AKMA application key for the AF in the home network based on the AKMA key of the terminal.

The AKMA Application Key (KAF) is used to indicate the communication key between the terminal and the AF in the home network. For example, the AKMA application key is generated based on the AKMA key of the terminal. Therefore, executing step 1106 requires the following condition to be met: the AAnF in the home network stores the AKMA key of the terminal.

The acquisition of AKMA application key can be achieved through the following method: AAnF in the home network obtains A-KID and AF_ID according to the application key acquisition request. Afterwards, AAnF in the home network can generate the AKMA application key based on the AKMA key and AF_ID.

Optionally, the AAnF in the home network can verify whether the terminal is authorized to use AKMA services based on the existence of the AKMA key of the terminal corresponding to the A-KID.

Optionally, before executing step 1106, the AAnF in the home network needs to perform the following steps: based on the authorization information or policy, determining that the AAnF in the home network provides services to the AF in the home network and the proxy entity in the service network. The method provided in this embodiment further includes step 1105: the AAnF in the home network determines to provide services to the AF in the home network and the proxy entity in the service network based on the authorization information or policy. Optionally, the authorization information or policy can be provided by the local policies or NRF in the home network. For example, the AAnF in the home network determines whether it can provide services to the AF in the home network and the proxy entity in the service network based on the authorization information or policy associated with AF_ID.

In the case where the AAnF in the home network can provide services to the AF in the home network and the proxy entity in the service network, the AAnF in the home network performs step 1106; in the case where the AAnF in the home network cannot provide services to the AF in the home network and the proxy entity in the service network, the AAnF in the home network may refuse to perform step 1106 and provide an error response to the AF in the home network.

Step 1108: The AAnF in the home network feeds back a second application key acquisition response to the AF in the home network.

In the case where the AF in the home network does not require terminal identification, the AAnF in the home network will receive the second application key acquisition request. After generating the AKMA application key, the AAnF in the home network sends the second application key acquisition response to the AF in the home network.

Optionally, the second application key acquisition response can be represented using Naanf_AKMA_ApplicationKey_AnonU_ser_Get Response.

Optionally, in the case where the AAnF in the home network receives the second application key acquisition request, the AKMA application key information fed back by the AAnF in the home network does not include the SUPI of the terminal, that is, the second application key acquisition response does not include the SUPI of the terminal. The AKMA application key information of AF carried in the second application key acquisition response includes at least one of the following information: AKMA application key, expiration time of AKMA application key. The expiration time of AKMA application keys can be represented using KAF expTime.

Optionally, if the AKMA key of the terminal is not stored in the AAnF in the home network, the AAnF in the home network will provide an error response to the AF in the home network.

Step 1110: The AAnF in the home network sends an application key confirmation request to the proxy entity in the service network.

The application key confirmation request can be represented by AKMA Application Key Comfirmation Request. Optionally, in the case where the service network identifier of the terminal is different from the home network identifier, i.e. the terminal is roaming, the AAnF in the home network will send the application key confirmation request to the proxy entity in the service network. Optionally, the application key confirmation request includes at least one of the following:
· AKMA application key;
· expiration time of AKMA application key;
· AF identifier;
· AKMA key identifier;
· SUPI of the terminal.

The AF identifier is the identifier of the AF in the home network, and the AKMA key identifier is the identifier of the AKMA key of the terminal. Optionally, the AKMA key identifier stores the home network identifier of the terminal.

It should be noted that in the case where the service network identifier of the terminal is different from the home network identifier, the AAnF in the home network needs to first determine the proxy entity in the network elements of the service network before sending the application key confirmation request to the proxy entity in the service network. That is, the method provided in this embodiment further includes step 1109: the AAnF in the home network determines the proxy entity in the network elements of the service network. Optionally, in the case where the service network identifier of the terminal is different from the home network identifier, the AAnF in the home network discovers the proxy entity in the service network through the NRF in the service network and the home network in the network elements of the service network. Alternatively, the information of proxy entity in the service network is locally configured in the AAnF of the home network. At this point, AAnF in the home network does not need to discover the proxy entity in the service network through NRF.

Optionally, the above proxy entity in the service network is a separate NF in the service network; or the proxy entity in the service network is a part of any NF in the service network; or the proxy entity in the service network is a trusted application function within the 3GPP operator domain.

Step 1112: The proxy entity in the service network sends an application key confirmation response to the AAnF in the home network.

The application key confirmation response can be represented by AKMA Application Key Confirmation Response. The application key confirmation response is used by the proxy entity in the service network to notify the AAnF in the home network that it has learned that the terminal can establish AKMA based communication with the AF in the home network, as well as relevant AKMA application key information. Optionally, upon receiving the application key confirmation request sent by the AAnF in the home network, the proxy entity in the service network will store the application key confirmation request and then send the application key confirmation response to the AAnF in the home network.

Step 1114: The AF in the home network feeds back the application session establishment response to the terminal.

The application session establishment response corresponds to the application session establishment request and is used to feed back the AKMA application key information of the AF in the home network, and can be represented by Application Session Establishment Response. After receiving the application session establishment response, the terminal can determine the AKMA application key based on the AKMA application key information of the AF carried in the application session establishment response.

In one implementation scenario, the AAnF in the home network does not carry the AKMA key of the terminal.

In this case, the AAnF in the home network sends an error response to the AF in the home network. In the case of receiving an error response fed back from the AAnF in the home network, the AF in the home network will provide the terminal with rejection information for the application session, wherein the rejection information includes the response failure reason. Based on this, the AF in the home network refuse to establish application sessions by including the response failure reason.

Optionally, after receiving the rejection information of the application session fed back from the AF in the home network, the terminal may resend an application session establishment request carrying a new A-KID and/or service network identifier.

It should be understood that in the embodiments given above, the steps on the UE side can be separately applied as an embodiment of the key management method applied to the terminal, the steps on the AAnF side in the home network can be separately applied as an embodiment of the key management method applied to the AAnF side in the home network, the steps on the AF side in the home network can be separately applied as an embodiment of the key management method applied to the AF side in the home network, and the steps on the proxy entity side in the service network can be separately applied as an embodiment of the key management method applied to the proxy entity in the service network. With respect to the specific explanation of the steps of the key management method, reference can be made to the above content and will not be repeated.

In summary, with the method provided in this embodiment, in the roaming scenario, the terminal sends the service network identifier to the AF in the home network, and the AF in the home network sends the application key acquisition request carrying the service network identifier to the AAnF in the home network, so that the AAnF in the home network can determine the proxy entity in the network elements of the service network when determining based on the service network identifier that the terminal is in the roaming scenario, and send the application key confirmation request to it, so that the relevant network elements in the service network know that the terminal can establish AKMA based communication with the AF in the home network, thereby providing AKMA services in the roaming scenario.

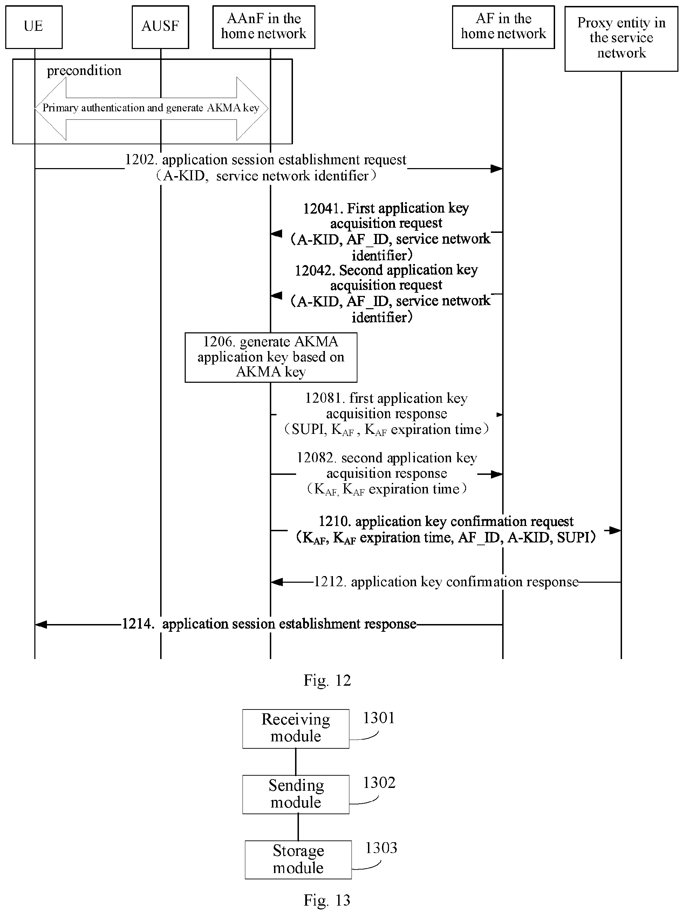

Fig. 12 shows a flowchart of a key management method provided by an exemplary embodiment of the present disclosure, applied in a roaming scenario. The method includes the followings.

For example, it is necessary to determine whether AKMA services can be used between AF and UE in the home network before they communicate. Before performing the following steps, go through the primary authentication process between UE and AUSF to enable UE and AUSF to generate the same KAUSF, KAKMA, and A-KID locally, respectively.

With respect to the primary authentication process, reference can be made to the above content and will not be repeated.

Optionally, the prerequisite for AF in the home network to communicate with UE is implicitly specific to both UE and AF, or explicitly indicated by AF to UE.

Step 1202: UE sends an application session establishment request to the AF in the home network.

The application session establishment request is used to trigger the establishment request for the application session, and the application session establishment request can be represented by Application Session Establishment Request.

The application session establishment request carries A-KID and the service network identifier. A-KID is used to indicate the identifier of the AKMA key of the UE, and the service network identifier is used to indicate the service network of the UE. The service network identifier is used to trigger AAnF in the home network to send an application key confirmation request to the proxy entity in the service network when the service network identifier of the UE is different from the home network identifier.

In some embodiments, the application session establishment request includes A-KID, which carries the service network identifier of the UE; or the application session establishment request includes the service network identifier of UE and A-KID; or the application session establishment request includes A-KID, and the UE sends the service network identifier of UE before or after the application session establishment request. Optionally, the service network identifier indicates that there is a corresponding application session establishment request or A-KID.

Optionally, TS 33.535 defines that A-KID should adopt the format of NAI specified in Article 2.2 of IETF RFC 7542, such as username @ security domain.

Step 12041: The AF in the home network sends a first application key acquisition request to the AAnF in the home network.

The first application key acquisition request carries the service network identifier of the UE. The first application key acquisition request is used to request AKMA application key information of AF in the home network from AAnF in the home network.

In the case where the AF in the home network requires terminal identification, the AF in the home network sends the first application key acquisition request to the AAnF in the home network. For example, the first application key acquisition request can be represented using Naanf_AKMA_ApplicationKey_ Get Request. (The AF sends the request to AAnF via the Naanf_AKMA _ApplicationKey_Get service operation if the policy in AF indicates it needs the UE identity.)

Optionally, the first application key acquisition request includes at least one of the following:
· A-KID;
· AF_ID.

Optionally, the first application key acquisition request includes A-KID and the service network identifier (and may also include AF_ID). A-KID carries the service network identifier; or the first application key acquisition request carries the service network identifier through a separate field. That is, the first application key acquisition request can carry the service network identifier of the UE through the above two methods.

Optionally, the AF in the home network requires UE identification, which is indicated by the policy in the AF in the home network.

Optionally, before executing step 12041 (12042), the AF in the home network also needs to determine the AAnF in the home network. For example, AF in the home network discovers AAnF in the home network through NRF in the home network.

In some embodiments, NRF delegates a Service Communication Proxy (SCP) to discover and select at least one AAnfProxy in the home network. In this case, the AAnfProxy NF in the home network sends all available factors to the SCP.

Step 12042: The AF in the home network sends a second application key acquisition request to the AAnF in the home network.

The second application key acquisition request carries the service network identifier of the UE. The second application key acquisition request is used to request AKMA application key information of AF in the home network from AAnF in the home network.

In the case where the AF in the home network does not require terminal identification, the AF in the home network sends the second application key acquisition request to the AAnF in the home network. For example, the second application key acquisition request can be represented using Naanf_AKMA_ApplicationKey_AnonUser_Get Request. (The AF sends the request via the Naanf_AKMA_ApplicationKey_AnonUser_Get service operation if the policy in AF indicates it does not need the UE identity.)

Optionally, the second application key acquisition request includes at least one of the following:
· A-KID;
· AF_ID.

Optionally, the second application key acquisition request includes A-KID and the service network identifier (and may also include AF_ID). A-KID carries the service network identifier; or the second application key acquisition request carries the service network identifier through a separate field. That is, the second application key acquisition request can carry the service network identifier of the UE through the above two methods.

Optionally, the AF in the home network does not require UE identification, which is indicated by the policy in the AF in the home network.

It should be understood that step 12041 and step 12042 can be executed separately and cannot be executed simultaneously.

Step 1206: The AAnF in the home network generates the AKMA application key for the AF in the home network based on the AKMA key of the UE.

The AKMA Application Key (KAF) is used to indicate the communication key between the UE and the AF in the home network. For example, the AKMA application key is generated based on the AKMA key of the UE. Therefore, executing step 1206 requires the following condition to be met: the AAnF in the home network stores the AKMA key of the UE.

The acquisition of AKMA application key can be achieved through the following method: AAnF in the home network obtains A-KID and AF_ID according to the first application key acquisition request or the second application key acquisition request. Afterwards, AAnF in the home network can generate the AKMA application key based on the AKMA key and AF_ID.

Optionally, the AAnF in the home network can verify whether the terminal is authorized to use AKMA services based on the existence of the AKMA key of the terminal corresponding to the A-KID. (The AAnF shall verify whether the AF is authorized to use AKMA based on the presence of the UE specific KAKMA key identified by the A-KID.)

Optionally, before executing step 1206, the AAnF in the home network needs to perform the following steps: based on the authorization information or policy associated with AF_ID, determining whether the AAnF in the home network can provide services to the AF in the home network and the proxy entity in the service network. Optionally, the authorization information or policy can be provided by the local policies or NRF in the home network.

In the case where the AAnF in the home network can provide services to the AF in the home network and the proxy entity in the service network, the AAnF in the home network performs step 1206; in the case where the AAnF in the home network cannot provide services to the AF in the home network and the proxy entity in the service network, the AAnF in the home network may refuse to perform step 1206 and provide an error response to the AF in the home network.(The AAnF shall check whether the AAnF can provide the service to the AF based on the configured local policy or based on the authorization information or policy provided by the NRF in the home network using the AF_ID. If it succeeds, the following procedures are executed. Otherwise, the AAnF shall reject the procedure.)

In one implementation scenario, the AAnF in the home network may or may not store the AKMA key of the UE. When the AAnF in the home network stores the AKMA key of the UE, the AAnF in the home network generates the AKMA application key of the AF in the service network based on the AKMA key of the UE (If KAKMA is presented in AAnF, the AAnF should derive KAF for the AF.); If the AKMA key of the UE is not stored in the AAnF in the home network, the AAnF in the home network feeds back an error response (If KAKMA is not present in the AAnF, the AAnF shall continue with step 12081 or 12082 with an error response.)

Step 12081: The AAnF in the home network feeds back a first application key acquisition response to the AF in the home network.

In the case where the AF in the home network requires terminal identification, the AAnF in the home network will receive the first application key acquisition request After generating the AKMA application key, the AAnF in the home network sends the first application key acquisition response to the AF in the home network. Optionally, the first application key acquisition response can be represented using Naanf_AKMA_ApplicationKey_Get Response. (The AAnF sends Naanf_AKMA_ApplicationKey_Get Response to the AF with SUPI, KAF and the KAF expiration time.)

The AKMA application key information of AF carried in the first application key acquisition response includes at least one of the following information: AKMA application key, expiration time of AKMA application key, and SUPI of the UE.

Optionally, if the AKMA key of the UE is not stored in the AAnF in the home network, the AAnF in the home network will provide an error response to the AF in the home network.

Step 12082: The AAnF in the home network feeds back a second application key acquisition response to the AF in the home network.

In the case where the AF in the home network does not require terminal identification, the AAnF in the home network will receive the second application key acquisition request. After generating the AKMA application key, the AAnF in the home network sends the second application key acquisition response to the AF in the home network. Optionally, the second application key acquisition response can be represented using Naanf_AKMA_ApplicationKey_AnonUser_Get Response. (The AAnF sends Naanf_AKMA_ApplicationKey_AnnonUser_Get Response to the AF with KAF and the KAF expiration time.)

Optionally, in the case where the AAnF in the home network receives the second application key acquisition request, the second application key acquisition response does not include the SUPI of the UE. The AKMA application key information of the AF carried in the second application key acquisition response includes at least one of the following information: AKMA application key, expiration time of AKMA application key.

Optionally, in the case where the AKMA key of the UE is not stored in the AAnF in the home network, the AAnF in the home network will provide an error response to the AF in the home network.

It should be understood that step 12081 and step 12082 can be executed separately and cannot be executed simultaneously.

Step 1212: The AAnF in the home network sends an application key confirmation request to the AAnFProxy in the service network.

The application key confirmation request can be represented by AKMA Application Key Comfirmation Request. Optionally, in the case where the service network identifier of the terminal is different from the home network identifier, i.e. the UE is roaming, the AAnF in the home network will send the application key confirmation request to the AAnFProxy in the service network. (If the serving network identifier of UE is different from the home network identifier of UE,the AAnF sends AKMA Application Key Confirmation request to the AAnFProxy in the visited network with KAF, KAF expiration time, AF_ID, A-KID, and SUPI of the UE.)

Optionally, the application key confirmation request includes at least one of the following:
· AKMA application key;
· expiration time of AKMA application key;
· AF_ID;
· A-KID;
· SUPI of the terminal.

Optionally, the home network identifier of the UE is stored in the AKMA key identifier (Home network identifier is stored in the A-KID of the UE.)

It should be noted that in the case where the service network identifier of the terminal is different from the home network identifier, the AAnF in the home network needs to first determine the AAnFProxy in the network elements of the service network before sending the application key confirmation request to the AAnFProxy in the service network. (If the serving network identifier of UE is different from the home network identifier of UE, the AAnF in the home network performs AAnFProxy selection to allocate an AAnFProxy Instance in the visited network that handles the AKMA request. Otherwise, the AAnF does not need to discovery AAnFProxy in the serving network of UE.)

Optionally, in the case where the service network identifier of the UE is different from the home network identifier, the AAnF in the home network discovers the AAnFProxy in the service network through the NRF in the service network and the home network in the network elements of the service network. Or, the information of AAnFProxy in the service network is locally configured in the AAnF in the home network. At this point, the AAnF in the home network does not need to discover the AAnFProxy in the service network through NRF. (The AAnF in the home network shall utilize the NRF in the home network and NRF in the visited network to discover the AAnFProxy instance(s) unless AAnFProxy information is available by other means, e.g. locally configured on the AAnF.)

Optionally, the above AAnFProxy in the service network is a separate NF in the service network; or the AAnFProxy in the service network is a part of any NF in the service network; or the AAnFProxy in the service network is a trusted application function within the 3GPP operator domain.

Step 1212: The AAnFProxy in the service network sends an application key confirmation response to the AAnF in the home network.

The application key confirmation response can be represented by AKMA Application Key Confirmation Response. The application key confirmation response is used by the AAnFProxy in the service network to notify the AAnF in the home network that it has learned that the UE can establish AKMA based communication with the AF in the home network, as well as relevant AKMA application key information.

Optionally, upon receiving the application key confirmation request sent by the AAnF in the home network, the AAnFProxy in the service network will store the application key confirmation request and then send the application key confirmation response to the AAnF in the home network. (The AAnFProxy in the visited network firstly stores KAF, KAF expiration time, AF_ID, A-KID, and SUPI of the UE. Then it sends the AKMA Application Key Confirmation response to the AAnF in the home network of UE.)

Step 1214: The AF in the home network feeds back the application session establishment response to the UE.

The application session establishment response corresponds to the application session establishment request and is used to feed back the AKMA application key information of the AF in the home network, and can be represented by Application Session Establishment Response. After receiving the application session establishment response, the UE can determine the AKMA application key based on the AKMA application key information of the AF carried in the application session establishment response.

In one implementation scenario, the AAnF in the home network does not carry the AKMA key of the UE.

In this case, the AAnF in the home network sends an error response to the AF in the home network. In the case of receiving an error response fed back from the AAnF in the home network, the AF in the home network will provide the UE with rejection information for the application session, wherein the rejection information includes the response failure reason. Based on this, the AF in the home network refuse to establish application sessions by including the response failure reason. Optionally, after receiving the rejection information of the application session fed back from the AF in the home network, the UE may resend an application session establishment request carrying a new A-KID and/or service network identifier. (The AF sends the Application Session Establishment Response to the UE. If the information in step 12081 or 12082 indicates failure of AKMA key request, the AF shall reject the Application Session Establishment by including a failure cause. Afterwards, UE may trigger a new Application Session Establishment request with the latest A-KID to the AKMA AF.)

It should be understood that in the embodiments given above, the steps on the UE side can be separately applied as an embodiment of the key management method applied to the terminal, the steps on the AAnF side in the home network can be separately applied as an embodiment of the key management method applied to the AAnF side in the home network, the steps on the AF side in the home network can be separately applied as an embodiment of the key management method applied to the AF side in the home network, and the steps on the AAnFProxy side in the service network can be separately applied as an embodiment of the key management method applied to the AAnFProxy in the service network. With respect to the specific explanation of the steps of the key management method, reference can be made to the above content and will not be repeated.

For example, as shown in Fig. 12, different executing entities have the following different functions.

### 1. UE side

UE can send a service network identifier to AF through an application session establishment request message. (The UE should be able to send serving network identifier to the AF via Application Session Establishment Request message.)

### 2. AAnFProxy side in the service network

The AAnFProxy function in the service network can be implemented as a separate network function in the service network, or as a part of any NF in the service network, or as a trusted application function within the 3GPP operator domain (AAnfProxy functionality may be implemented as a separate network function in the visited network, or be part of any NF in the visited network, or as a trusted AF.)

The AAnFProxy in the service network can obtain K_{AF}, K_{AF} expiration time, AF_ID, A-KID, and SUPI from the AAnF in the home network of UE (AAnFProxy should be able to obtain KAF, KAF expiration time, AF_ID, A-KID, and SUPI of the UE from AAnF in the home network of UE.)

### 3. AAnF side in the home network

The AAnF in the home network can receive the service network identifier of the UE from the AF in the home network (AAnF should be able to receive Serving Network Identifier information of UE from the AF.)

The AAnF in the home network can understand the service network identifier stored in the A-KID (AAnF should be able to understand Serving Network Identifier which is stored in the A-KID.)

In case of obtaining the service network identifier of the UE, the AAnf in the home network can use the NRF in the home network and the service network to select the AAnFProxy in the service network (With serving network identifier of UE AAnf should be able to leverage NRFs in the home network and visited network to select AAnFProxy in the visited network.)

The AAnF in the home network can send K_{AF}, K_{AF} expiration time, AF_ID, A-KID and SUPI of the UE to the AAnFProxy in the service network (AAnF should be able to send K_{AF}, K_{AF} expiration time, AF_ID, A-KID, and SUPI of the UE to AAnFProxy in the visited network of UE.)

If the service network identifier of the UE is different from the home network identifier of the UE, the AAnF in the home network can perform AAnFProxy selection to allocate an AAnFProxy instance in the service network to handle the AKMA request (If the serving network identifier of UE is different from the home network identifier of UE, the AAnF in the home network should be able to perform AAnFProxy selection to allocate an AAnFProxy Instance in the visited network that handles the AKMA request.)

### 4. AF side in the home network

The AF in the home network can receive A-KID and the service network identifier from the UE (AF should be able to receive A-KID and serving network identifier from the UE.)

The AF in the home network can understand the service network identifier (AF should be able to understand the serving network identifier.)

The AF in the home network can request K_{AF} from the AAnF in the home network of the UE by sending A-KID, AF_ID, and the service network identifier to it (AF should be able to request K_{AF} from AAnF in the home network of UE by sending A-KID, AF_ID, serving network identifier to it.)

In summary, with the method provided in this embodiment, in the roaming scenario, the UE sends the service network identifier to the AF in the home network, and the AF in the home network sends the application key acquisition request carrying the service network identifier to the AAnF in the home network. Therefore, when the AAnF in the home network determines based on the service network identifier that the UE is in the roaming scenario, it can determine the AAnFProxy in the network elements of the service network and send the application key confirmation request to it, so that the relevant network elements in the service network know that the UE can establish AKMA based communication with the AF in the home network, thereby providing AKMA services in the roaming scenario.

It should be noted that the sequence of steps in the method provided in the embodiments of the present disclosure can be appropriately adjusted, and the steps can also be added or removed according to the situation. Any skilled person familiar with the technical field can easily think of changing methods within the technical scope disclosed in the present application, which should be included in the protection scope of the present application, and therefore will not be repeated.

Fig. 13 shows a block diagram of a key management apparatus provided in an exemplary embodiment of the present disclosure. The apparatus is applied in a roaming scenario, and as shown in Fig. 13, the apparatus includes a receiving module 1301.

The receiving module 1301 is configured to receive an application key confirmation request sent by an anchor function network element (AAnF) of authentication and key management for applications (AKMA) in a home network.

In an optional design, the application key confirmation request includes at least one of:
AKMA application key;
expiration time of the AKMA application key;
AF identifier;
AKMA key identifier;
subscription permanent identifier (SUPI) of a terminal;
wherein, the AF identifier is an identifier of an AF in the home network, and the AKMA key identifier is an identifier of an AKMA key of the terminal.

In an optional design, the application key confirmation request is sent by the AAnF to the proxy entity in case that a service network identifier of a terminal is different from a home network identifier.

In an optional design, the apparatus further includes:
a sending module 1302, configured to send an application key confirmation response to the AAnF.

In an optional design, the apparatus further includes:
a storage module 1303, configured to store the application key confirmation request.

In an optional design, the proxy entity is determined by the AAnF in network elements of the service network in case that a service network identifier of the terminal is different from a home network identifier.

In an optional design, the proxy entity is discovered by the AAnF in the network elements of the service network through the network storage function (NRF) in the service network and the home network.

In an optional design, information of the proxy entity is configured locally in the AAnF.

In an optional design, the proxy entity is a separate network function (NF) in the service network; or
the proxy entity is a part of any NF in the service network; or
the proxy entity is a trusted application function within the 3GPP operator domain.

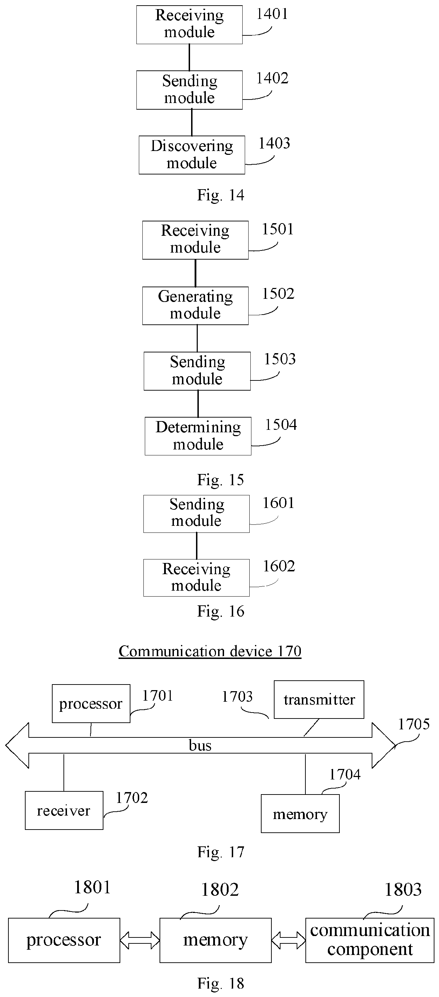

Fig. 14 shows a block diagram of a key management apparatus provided in an exemplary embodiment of the present disclosure. The apparatus is applied in a roaming scenario, and as shown in Fig. 14, the apparatus includes:
a receiving module 1401, configured to receive a service network identifier and an AKMA key identifier sent by a terminal; and
a sending module 1402, configured to send an application key acquisition request to an AAnF in the home network, wherein the application key acquisition request carries the service network identifier, and the service network identifier is used to trigger the AAnF to send an application key confirmation request to a proxy entity in a service network in case that the service network identifier of the terminal is different from a home network identifier;
the receiving module 1401 is further configured to receive an application key acquisition response fed back from the AAnF, wherein the application key acquisition response includes AKMA application key information of the AF in the home network.

In an optional design, the AKMA application key information includes at least one of:
AKMA application key;
expiration time of the AKMA application key;
SUPI of the terminal.

In an optional design, the sending module 1402 is configured to:
send a first application key acquisition request to the AAnF in case that the AF requires terminal identification.

In an optional design, the first application key acquisition request includes at least one of:
AKMA key identifier;
AF identifier;
wherein, the AKMA key identifier is an identifier of an AKMA key of the terminal, and the AF identifier is an identifier of the AF in the home network.

In an optional design, the first application key acquisition request includes the AKMA key identifier and the service network identifier;
the AKMA key identifier carries the service network identifier; or the first application key acquisition request carries the service network identifier through a separate field.

In an optional design, the sending module 1402 is configured to:
send a second application key acquisition request to the AAnF in the home network in case that the AF in the home network does not require terminal identification.

In an optional design, the second application key acquisition request includes at least one of:
AKMA key identifier;
AF identifier;
wherein, the AKMA key identifier is an identifier of an AKMA key of the terminal, and the AF identifier is an identifier of the AF in the home network.

In an optional design, the second application key acquisition request includes the AKMA key identifier and the service network identifier;
the AKMA key identifier carries the service network identifier; or the second application key acquisition request carries the service network identifier through a separate field.

In an optional design, whether the AF requires the terminal identification is indicated by a policy in the AF.

In an optional design, the receiving module 1401 is configured to:
receive an error response fed back from the AAnF, wherein the error response is sent in case that the AKMA key of the terminal is not stored in the AAnF;
the sending module 1402 is configured to send the error response to the terminal.

In an optional design, the apparatus further includes:
a discovering module 1403, configured to discover the AAnF through NRF in the home network.

In an optional design, the receiving module 1401 is configured to:
receive an application session establishment request sent by the terminal, wherein the application session establishment request carries the service network identifier;
the sending module 1402 is configured to feed back an application session establishment response to the terminal.

In an optional design, the application session establishment request includes an AKMA key identifier of AKMA, wherein the AKMA key identifier carries the service network identifier; or the application session establishment request includes the AKMA key identifier and the service network identifier;
wherein, the AKMA key identifier is an identifier of an AKMA key of the terminal.

In an optional design, the sending module 1402 is configured to:
feed back rejection information for application session to the terminal in case of receiving an error response fed back from the AAnF, wherein the rejection information includes a response failure reason.

In an optional design, the AKMA key identifier adopts a Network Access Identifier (NAI) format.

Fig. 15 shows a block diagram of a key management apparatus provided in an exemplary embodiment of the present disclosure. The apparatus is applied in a roaming scenario, and as shown in Fig. 15, the apparatus includes:
a receiving module 1501, configured to receive an application key acquisition request sent by an AF in the home network, wherein the application key acquisition request carries a service network identifier;
a generating module 1502, configured to generate an AKMA application key of the AF based on an AKMA key of a terminal;
a sending module 1503, configured to feed back an application key acquisition response to the AF, wherein the application key acquisition response includes AKMA application key information of the AF;
the sending module 1503 is further configured to send an application key confirmation request to a proxy entity in a service network.

In an optional design, the AKMA application key information includes at least one of:
AKMA application key;
expiration time of the AKMA application key;
SUPI of the terminal.

In an optional design, the receiving module 1501 is configured to:
receive a first application key acquisition request sent by the AF, wherein the first application key acquisition request is used to indicate that the AF requires terminal identification.

In an optional design, the first application key acquisition request includes at least one of:
AKMA key identifier;
AF identifier;
wherein, the AKMA key identifier is an identifier of an AKMA key of the terminal, and the AF identifier is an identifier of the AF.

In an optional design, the first application key acquisition request includes the AKMA key identifier and the service network identifier;
the AKMA key identifier carries the service network identifier; or the first application key acquisition request carries the service network identifier through a separate field.

In an optional design, the receiving module 1501 is configured to:
receive a second application key acquisition request sent by the AF, wherein the second application key acquisition request is used to indicate that the AF does not require terminal identification.

In an optional design, the second application key acquisition request includes at least one of:
AKMA key identifier;
AF identifier;
wherein, the AKMA key identifier is an identifier of an AKMA key of the terminal, and the AF identifier is an identifier of the AF.

In an optional design, the second application key acquisition request includes the AKMA key identifier and the service network identifier;
the AKMA key identifier carries the service network identifier; or the second application key acquisition request carries the service network identifier through a separate field.

In an optional design, the AKMA application key information fed back from the AAnF does not include SUPI of the terminal in case that the AAnF receives the second application key acquisition request.

In an optional design, the sending module 1503 is configured to:
feed back an error response to the AF in case that the AAnF does not store the AKMA key of the terminal.

In an optional design, the apparatus further includes:
a determining module 1504, configured to determine that the AAnF provides services to the AF and a proxy entity in the service network based on authorization information or policy.

In an optional design, the authorization information or policy is provided by a local policy or NRF in the home network.

In an optional design, the application key confirmation request includes at least one of:
AKMA application key;
expiration time of the AKMA application key;
AF identifier;
AKMA key identifier;
SUPI of the terminal;
wherein, the AF identifier is an identifier of an AF in the home network, and the AKMA key identifier is an identifier of an AKMA key of the terminal.

In an optional design, the sending module 1503 is configured to:
send the application key confirmation request to the proxy entity in case that a service network identifier of the terminal is different from a home network identifier.

In an optional design, the receiving module 1501 is configured to:
receive an application key confirmation response sent by the proxy entity.

In an optional design, the apparatus further includes:
a determining module 1504, configured to determine the proxy entity in network elements of the service network in case that a service network identifier of the terminal is different from a home network identifier.

In an optional design, the determining module 1504 is configured to:
discover the proxy entity in the network elements of the service network through an NRF in the service network and the home network, in case that the service network identifier of the terminal is different from the home network identifier.

Fig. 16 shows a block diagram of a key management apparatus provided in an exemplary embodiment of the present disclosure. The apparatus is applied in a roaming scenario, and as shown in Fig. 16, the apparatus includes:
a sending module 1601, configured to send a service network identifier and an AKMA key identifier to an AF in a home network, wherein the service network identifier is used to trigger an AAnF in the home network to send an application key confirmation request to a proxy entity in a service network in case that the service network identifier of the terminal is different from a home network identifier, and the AKMA key identifier is an identifier of an AKMA key of the terminal.

In an optional design, the sending module 1601 is configured to:
send an application session establishment request to an AF, wherein the application session establishment request carries the service network identifier;
the apparatus further includes:
   a receiving module 1602, configured to receive an application session establishment response fed back by the AF.

In an optional design, the application session establishment request includes an AKMA key identifier of AKMA, wherein the AKMA key identifier carries the service network identifier; or the application session establishment request includes the AKMA key identifier and the service network identifier;
wherein, the AKMA key identifier is an identifier of an AKMA key of the terminal.

According to another aspect of the present disclosure, a proxy entity in a service network is provided. The proxy entity includes a communication component;
the communication component is configured to receive an application key confirmation request sent by an AAnF in a home network.

Fig. 17 shows a block diagram of a communication device (terminal or network device) provided in an exemplary embodiment of the present disclosure. The communication device 170 includes a processor 1701, a receiver 1702, a transmitter 1703, a memory 1704 and a bus 1705.

The processor 1701 includes one or more processing cores, and the processor 1701 executes various functional applications and information processing by running software programs and modules.

The receiver 1702 and transmitter 1703 can be implemented as a communication component, which can be a communication chip.

The memory 1704 is connected to the processor 1701 through the bus 1705.

The memory 1704 can be used to store at least one instruction, and the processor 1701 is configured to execute the at least one instruction to implement the various steps in the above method embodiments.

In addition, the memory 1704 can be implemented by any type of volatile or nonvolatile storage device or combination thereof, including but not limited to: magnetic or optical disks, erasable programmable read only memory (EEPROM), erasable programmable read only memory (EPROM), static random access memory (SRAM), read only memory (ROM), magnetic storage, flash memory, programmable read only memory (PROM).

When the communication device is implemented as a terminal, the processor and transceiver in the communication device involved in the embodiments of the present disclosure can be implemented together as one communication chip, or the transceiver can form a separate communication chip. The transmitter in the transceiver performs the sending step performed by the terminal in any of the methods shown above, the receiver in the transceiver performs the receiving step performed by the terminal in any of the methods shown above, and the processor performs steps other than the sending and receiving steps, which will not be repeated here.

When the communication device is implemented as a network device, the processor and transceiver in the communication device involved in the embodiments of the present disclosure can be implemented together as one communication chip, or the transceiver can form a separate communication chip. The transmitter in the transceiver performs the sending step performed by the network device in any of the methods shown above, the receiver in the transceiver performs the receiving step performed by the network device in any of the methods shown above, and the processor performs steps other than the sending and receiving steps, which will not be repeated here.

Fig. 18 shows a schematic diagram of a structure of a network element device provided by an exemplary embodiment of the present disclosure. The network element device includes a processor 1801, a memory 1802, and a communication component 1803.

The processor 1801 is connected to the memory 1802, and the memory 1802 is connected to the communication component 1803.

The memory 1802 can be used to store at least one instruction and computer program, and the processor 1801 is used to execute the at least one instruction and computer program to implement the processing steps of the key management method executed by the core network element in the above method embodiments. The processing steps refer to other steps besides the receiving and sending steps.

The communication component 1803 is used to implement the receiving and sending steps of the key management method executed by the core network element in the above method embodiments.

Embodiments of the present disclosure also provide a proxy entity in a service network, wherein the proxy entity includes a communication component. The communication component is configured to receive an application key confirmation request sent by the anchor function network element (AAnF) of authentication and key management for applications (AKMA) in the home network.

Embodiments of the present disclosure also provide an application function AF, which includes a communication component. The communication component is configured to receive a service network identifier and an AKMA key identifier sent by a terminal; send an application key acquisition request to an AAnF in the home network, wherein the application key acquisition request carries the service network identifier, and the service network identifier is used to trigger the AAnF to send an application key confirmation request to a proxy entity in a service network in case that the service network identifier of the terminal is different from a home network identifier; and receive an application key acquisition response fed back from the AAnF, wherein the application key acquisition response includes AKMA application key information of the AF in the home network.

Embodiments of the present disclosure also provide an anchor function network element AAnF of authentication and key management for applications (AKMA), which includes a communication component and a processor. The communication component is configured to receive an application key acquisition request sent by an AF in the home network, wherein the application key acquisition request carries a service network identifier; the processor is configured to generate an AKMA application key of the AF based on an AKMA key of a terminal; the communication component is configured to feed back an application key acquisition response to the AF, wherein the application key acquisition response includes AKMA application key information of the AF; the communication component is configured to send an application key confirmation request to a proxy entity in a service network.

Embodiments of the present disclosure also provide a terminal, which includes a transceiver. The transceiver is configured to send a service network identifier and an AKMA key identifier to an AF in a home network, wherein the service network identifier is used to trigger an AAnF in the home network to send an application key confirmation request to a proxy entity in a service network in case that the service network identifier of the terminal is different from a home network identifier, and the AKMA key identifier is an identifier of an AKMA key of the terminal.

In an exemplary embodiment, a computer-readable storage medium is also provided, which stores at least one instruction, at least one program, a code set, or an instruction set. The at least one instruction, the at least one program, the code set, or the instruction set is loaded and executed by the processor to implement the key management methods provided by the various method embodiments described above.

In an exemplary embodiment, there is also provided a chip including programmable logic circuits and/or program instructions for implementing the key management methods provided by the various method embodiments when the chip is run on a communication device.

In an exemplary embodiment, a computer program product is also provided that, when run on a processor of a computer device, causes the computer device to execute the key management method described above.

Technicians in this field should be aware that in one or more of the above examples, the functions described in the embodiments of the present disclosure can be implemented using hardware, software, firmware, or any combination thereof. When implemented using software, these functions can be stored on computer-readable medium or transmitted as one or more instructions or code on computer-readable medium. Computer readable medium includes computer storage medium and communication medium, where communication medium includes any medium that facilitates the transfer of computer programs from one location to another. Storage medium can be any available medium that can be accessed by general-purpose or special-purpose computers.

The above are only exemplary embodiments of the present disclosure and is not intended to limit the present disclosure. Any modifications, equivalent substitutions, improvements, etc. made within the spirit and principles of the present application shall be included in the scope of protection of the present application.

## Claims

1. A key management method, applied in a roaming scenario, and performed by a proxy entity in a service network, the method comprising:
receiving an application key confirmation request sent by an anchor function network element (AAnF) of authentication and key management for applications (AKMA) in a home network.

2. The method of claim 1, wherein the application key confirmation request comprises at least one of:
an AKMA application key;
an expiration time of the AKMA application key;
an AF identifier;
an AKMA key identifier; or
a subscription permanent identifier (SUPI) of a terminal;
wherein, the AF identifier is an identifier of an AF in the home network, and the AKMA key identifier is an identifier of an AKMA key of the terminal.

3. The method of claim 1, wherein the application key confirmation request is sent by the AAnF to the proxy entity in case that a service network identifier of a terminal is different from a home network identifier.

4. The method of any of claims 1-3, further comprising:
sending an application key confirmation response to the AAnF.

5. The method of claim 4, further comprising:
storing the application key confirmation request.

6. The method of any of claims 1-3, wherein
the proxy entity is a separate network function (NF) in the service network; or
the proxy entity is a part of any NF in the service network; or
the proxy entity is a trusted application function within a Third Generation Partnership Project (3GPP) operator domain.

7. A key management method, applied in a roaming scenario, and performed by an AF in a home network, the method comprising:
receiving a service network identifier and an AKMA key identifier sent by a terminal;
sending an application key acquisition request to an AAnF in the home network, wherein the application key acquisition request carries the service network identifier, and the service network identifier is used to trigger the AAnF to send an application key confirmation request to a proxy entity in a service network in case that the service network identifier of the terminal is different from a home network identifier; and
receiving an application key acquisition response fed back from the AAnF, wherein the application key acquisition response comprises AKMA application key information of the AF.

8. The method of claim 7, wherein the AKMA application key information comprises at least one of:
an AKMA application key;
an expiration time of the AKMA application key; or
an SUPI of the terminal.

9. The method of claim 7, wherein sending the application key acquisition request to the AAnF in the home network comprises:
sending a first application key acquisition request to the AAnF in case that the AF requires terminal identification.

10. The method of claim 9, wherein the first application key acquisition request comprises at least one of:
an AKMA key identifier; or
an AF identifier;
wherein, the AKMA key identifier is an identifier of an AKMA key of the terminal, and the AF identifier is an identifier of the AF in the home network.

11. The method of claim 10, wherein the first application key acquisition request comprises the AKMA key identifier and the service network identifier;
the AKMA key identifier carries the service network identifier; or the first application key acquisition request carries the service network identifier through a separate field.

12. The method of claim 7, wherein sending the application key acquisition request to the AAnF in the home network comprises:
sending a second application key acquisition request to the AAnF in the home network in case that the AF in the home network does not require terminal identification.

13. The method of claim 12, wherein the second application key acquisition request comprises at least one of:
an AKMA key identifier; or
an AF identifier;
wherein, the AKMA key identifier is an identifier of an AKMA key of the terminal, and the AF identifier is an identifier of the AF in the home network.

14. The method of claim 13, wherein the second application key acquisition request comprises the AKMA key identifier and the service network identifier;
the AKMA key identifier carries the service network identifier; or the second application key acquisition request carries the service network identifier through a separate field.

15. The method of claim 9 or 12, wherein whether the AF requires the terminal identification is indicated by a policy in the AF.

16. The method of any of claims 7-14, further comprising:
receiving an error response fed back from the AAnF, wherein the error response is sent in case that the AKMA key of the terminal is not stored in the AAnF;
sending the error response to the terminal.

17. The method of any of claims 7-14, further comprising:
discovering the AAnF through NRF in the home network.

18. The method of any of claims 7-14, wherein receiving the service network identifier sent by the terminal comprises:
receiving an application session establishment request sent by the terminal, wherein the application session establishment request carries the service network identifier;
the method further comprises:
feeding back an application session establishment response to the terminal.

19. The method of claim 18, wherein
the application session establishment request comprises an AKMA key identifier of AKMA, wherein the AKMA key identifier carries the service network identifier; or the application session establishment request comprises the AKMA key identifier and the service network identifier;
wherein, the AKMA key identifier is an identifier of an AKMA key of the terminal.

20. The method of claim 18, further comprising:
feeding back rejection information for application session to the terminal in case of receiving an error response fed back from the AAnF, wherein the rejection information comprises a response failure reason.

21. A key management method, applied in a roaming scenario, and performed by an AAnF in a home network, the method comprising:
receiving an application key acquisition request sent by an AF in the home network, wherein the application key acquisition request carries a service network identifier;
generating an AKMA application key of the AF based on an AKMA key of a terminal;
feeding back an application key acquisition response to the AF, wherein the application key acquisition response comprises AKMA application key information of the AF; and
sending an application key confirmation request to a proxy entity in a service network.

22. The method of claim 21, wherein receiving the application key acquisition request sent by the AF in the home network comprises:
receiving a first application key acquisition request sent by the AF, wherein the first application key acquisition request is used to indicate that the AF requires terminal identification.

23. The method of claim 21, wherein receiving the application key acquisition request sent by the AF in the home network comprises:
receiving a second application key acquisition request sent by the AF, wherein the second application key acquisition request is used to indicate that the AF does not require terminal identification.

24. The method of claim 23, wherein the AKMA application key information fed back from the AAnF does not comprise SUPI of the terminal in case that the AAnF receives the second application key acquisition request.

25. The method of any of claims 21-24, further comprising:
determining that the AAnF provides services to the AF and a proxy entity in the service network based on authorization information or policy.

26. The method of claim 25, wherein
the authorization information or policy is provided by a local policy or NRF in the home network.

27. The method of any of claims 21-24, wherein sending the application key confirmation request to the proxy entity in the service network comprises:
sending the application key confirmation request to the proxy entity in case that a service network identifier of the terminal is different from a home network identifier.

28. The method of any of claims 21-24, further comprising:
receiving an application key confirmation response sent by the proxy entity.

29. The method of any of claims 21-24, further comprising:
determining the proxy entity in network elements of the service network in case that a service network identifier of the terminal is different from a home network identifier.

30. The method of claim 29, wherein determining the proxy entity in network elements of the service network in case that a service network identifier of the terminal is different from a home network identifier comprises:
discovering the proxy entity in the network elements of the service network through an NRF in the service network and the home network, in case that the service network identifier of the terminal is different from the home network identifier.

31. A key management method, applied in a roaming scenario, and performed by a terminal, the method comprising:
sending a service network identifier and an AKMA key identifier to an AF in a home network, wherein the service network identifier is used to trigger an AAnF in the home network to send an application key confirmation request to a proxy entity in a service network in case that the service network identifier of the terminal is different from a home network identifier, and the AKMA key identifier is an identifier of an AKMA key of the terminal.

32. A key management apparatus, applied in a roaming scenario, the apparatus comprising:
a receiving module, configured to receive an application key confirmation request sent by an AAnF in a home network.

33. A key management apparatus, applied in a roaming scenario, the apparatus comprising:
a receiving module, configured to receive a service network identifier and an AKMA key identifier sent by a terminal; and
a sending module, configured to send an application key acquisition request to an AAnF in the home network, wherein the application key acquisition request carries the service network identifier, and the service network identifier is used to trigger the AAnF to send an application key confirmation request to a proxy entity in a service network in case that the service network identifier of the terminal is different from a home network identifier;
the receiving module is further configured to receive an application key acquisition response fed back from the AAnF, wherein the application key acquisition response comprises AKMA application key information of the AF in the home network.

34. A key management apparatus, applied in a roaming scenario, the apparatus comprising:
a receiving module, configured to receive an application key acquisition request sent by an AF in the home network, wherein the application key acquisition request carries a service network identifier;
a generating module, configured to generate an AKMA application key of the AF based on an AKMA key of a terminal; and
a sending module, configured to feed back an application key acquisition response to the AF, wherein the application key acquisition response comprises AKMA application key information of the AF;
the sending module is further configured to send an application key confirmation request to a proxy entity in a service network.

35. A key management apparatus, applied in a roaming scenario, the apparatus comprising:
a sending module, configured to send a service network identifier and an AKMA key identifier to an AF in a home network, wherein the service network identifier is used to trigger an AAnF in the home network to send an application key confirmation request to a proxy entity in a service network in case that the service network identifier of the terminal is different from a home network identifier, and the AKMA key identifier is an identifier of an AKMA key of the terminal.

36. A proxy entity in a service network, wherein the proxy entity comprises a communication component;
the communication component is configured to receive an application key confirmation request sent by an AAnF in a home network.

37. An application function (AF), wherein the AF comprises a communication component;
the communication component is configured to receive a service network identifier and an AKMA key identifier sent by a terminal;
send an application key acquisition request to an AAnF in the home network, wherein the application key acquisition request carries the service network identifier, and the service network identifier is used to trigger the AAnF to send an application key confirmation request to a proxy entity in a service network in case that the service network identifier of the terminal is different from a home network identifier; and
receive an application key acquisition response fed back from the AAnF, wherein the application key acquisition response comprises AKMA application key information of the AF in the home network.

38. An anchor function network element (AAnF) of authentication and key management for applications (AKMA), wherein the AAnF comprises a communication component and a processor;
the communication component is configured to receive an application key acquisition request sent by an AF in the home network, wherein the application key acquisition request carries a service network identifier;
the processor is configured to generate an AKMA application key of the AF based on an AKMA key of a terminal;
the communication component is configured to feed back an application key acquisition response to the AF, wherein the application key acquisition response comprises AKMA application key information of the AF;
the communication component is configured to send an application key confirmation request to a proxy entity in a service network.

39. A terminal, wherein the terminal comprises a transceiver;
the transceiver is configured to send a service network identifier and an AKMA key identifier to an AF in a home network, wherein the service network identifier is used to trigger an AAnF in the home network to send an application key confirmation request to a proxy entity in a service network in case that the service network identifier of the terminal is different from a home network identifier, and the AKMA key identifier is an identifier of an AKMA key of the terminal.

40. A computer readable storage medium, storing executable instructions, which when loaded and executed by a processor, the key management method of any of claims 1-31 is implemented.
